# EUROPEAN PATENT APPLICATION

(11) **EP 4 770 178 A1**
(43) Date of publication of application: **01.07.2026**
(21) Application number: 23949402.4
(22) Date of filing: 23.08.2023
(51) Int. Cl.: H04W 24/08

(54) **SENSING CONTROL METHODS AND APPARATUSES, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: Penza, Giancarlo
(86) International application number: PCT/CN2023/114405
(87) International publication number: WO 2025/039211

(57) **Abstract**

Provided are sensing control methods and apparatuses, a device and a storage medium, relating to the technical field of communications. A method comprises: a terminal device receives first configuration information, the first configuration information being configuration information related to a first reference signal, and a measurement result for the first reference signal being used for determining switching of sensing modes and/or sensing control nodes (1110). In the method, the terminal device receives the configuration information related to the first reference signal, so as to achieve measurement of the first reference signal and finally obtain the measurement result used for determining switching of sensing modes and/or sensing control nodes; therefore, during the process of sensing services, switching of sensing modes and/or sensing control nodes can be performed, thus ensuring the continuity of the sensing services.

## Description

### TECHNICAL FIELD

Embodiments of the present disclosure relate to the technical field of communications, and in particular to a sensing control method, a sensing control apparatus, a device, and a storage medium.

### BACKGROUND

In the field of integrated sensing and communication, the environment or objects in the environment may be sensed by analyzing the direct, reflected, refracted or scattered signals of radio waves, thereby realizing exploration of the physical world.

In the related art, a sensing service may be performed collaboratively by a plurality of sensing nodes (such as a terminal device and a base station).

However, when a certain sensing node moves, the sensing service may be affected or even interrupted as a result.

### SUMMARY

Embodiments of the present disclosure provide a sensing control method, a sensing control apparatus, a device, and a storage medium. The technical schemes are as the following.

According to an aspect of an embodiment of the present disclosure, there is provided a sensing control method. The method is performed by a terminal device, and the method includes the following operation.

The terminal device receives first configuration information, where the first configuration information is configuration information related to a first reference signal, and a measurement result for the first reference signal is used to determine a switching of a sensing mode and/or a sensing control node.

According to an aspect of an embodiment of the present disclosure, there is provided a sensing control method. The method is performed by a network device, and the method includes the following operation.

The network device transmits first configuration information, where the first configuration information is configuration information related to a first reference signal, and a measurement result for the first reference signal is used to determine a switching of a sensing mode and/or a sensing control node of a terminal device.

According to an aspect of an embodiment of the present disclosure, there is provided a sensing control apparatus. The apparatus includes a transceiving module.

The transceiving module is configured to receive first configuration information, where the first configuration information is configuration information related to a first reference signal, and a measurement result for the first reference signal is used to determine a switching of a sensing mode and/or a sensing control node.

According to an aspect of an embodiment of the present disclosure, there is provided a sensing control apparatus. The apparatus includes a transceiving module.

The transceiving module is configured to transmit first configuration information, where the first configuration information is configuration information related to a first reference signal, and a measurement result for the first reference signal is used to determine a switching of a sensing mode and/or a sensing control node of a terminal device.

According to an aspect of an embodiment of the present disclosure, there is provided a communication device. The communication device includes a processor and a memory. Herein, the memory stores a computer program therein, and the processor executes the computer program to implement each of the aforementioned sensing control methods. In some embodiments, the communication device is a terminal device, or the communication device is a network device.

According to an aspect of an embodiment of the present disclosure, there is provided a computer-readable storage medium. The computer-readable storage medium has stored computer program therein, and the computer program is used to be executed by a processor to implement the sensing control method on the terminal device side or the sensing control method on the network device side.

According to an aspect of an embodiment of the present disclosure, there is provided a chip. The chip includes a programmable logic circuitry and/or program instructions. When the chip is running, the chip is configured for implementing the sensing control method on the terminal device side or the sensing control method on the network device side.

According to an aspect of an embodiment of the present disclosure, there is provided a computer program product. The computer program product includes a computer program stored in a computer-readable storage medium, and a processor reads and executes the computer program from the computer-readable storage medium to implement the sensing control method on the terminal device side or the sensing control method on the network device side.

The technical schemes provided by the embodiments of the present disclosure may include the following beneficial effects.

By receiving the configuration information related to the first reference signal by the terminal device, it is possible to realize the measurement for the first reference signal, and finally acquire the measurement result for determining the switching of the sensing mode and/or the sensing control node. Thereby, during the process of the sensing service, the sensing mode and/or the sensing control node can be enabled to be switched, which can ensure the continuity of the sensing service.

### BRIEF DESCRIPTION OF THE DRAWINGS

FIG. 1 is a schematic diagram of a network architecture according to an embodiment of the present disclosure.
FIG. 2 is a schematic diagram of a 5G network architecture according to an embodiment of the present disclosure.
FIG. 3 is a schematic diagram of a sensing mode according to an embodiment of the present disclosure.
FIG. 4 is a schematic diagram of a sensing scheme according to an embodiment of the present disclosure.
FIG. 5 is a schematic diagram of a sensing scheme according to another embodiment of the present disclosure.
FIG. 6 is a schematic diagram of a network coverage scenario according to an embodiment of the present disclosure.
FIG. 7 is a schematic diagram of an air interface signaling interaction of terminal echo sensing according to an embodiment of the present disclosure.
FIG. 8 is a schematic diagram of a sensing service according to an embodiment of the present disclosure.
FIG. 9 is a schematic diagram of an air interface signaling interaction of inter-terminal sensing according to an embodiment of the present disclosure.
FIG. 10 is a schematic diagram of a change occurred in a network coverage scenario according to an embodiment of the present disclosure.
FIG. 11 is a flowchart of a sensing control method according to an embodiment of the present disclosure.
FIG. 12 is a schematic diagram of a sensing coverage range and a communication coverage range according to an embodiment of the present disclosure.
FIG. 13 is a flowchart of a sensing control method according to another embodiment of the present disclosure.
FIG. 14 is a schematic diagram of a sensing control scheme according to an embodiment of the present disclosure.
FIG. 15 is a schematic diagram of a sensing control scheme according to another embodiment of the present disclosure.
FIG. 16 is a schematic diagram of a sensing control scheme according to another embodiment of the present disclosure.
FIG. 17 is a schematic diagram of a sensing control scheme according to another embodiment of the present disclosure.
FIG. 18 is a block diagram of a sensing control apparatus according to an embodiment of the present disclosure.
FIG. 19 is a block diagram of a sensing control apparatus according to another embodiment of the present disclosure.
FIG. 20 is a schematic structural diagram of a communication device according to an embodiment of the present disclosure.

### DETAILED DESCRIPTION

To make the objectives, technical schemes, and advantages of the present disclosure clearer, the embodiments of the present disclosure are described in further detail below with reference to the accompanying drawings.

The network architecture and service scenarios described in the embodiments of the present disclosure are intended to illustrate the technical schemes of the embodiments of the present disclosure more clearly, and do not constitute any limitation on the technical schemes provided by the embodiments of the present disclosure. Those skilled in the art can appreciate that with the evolution of the network architecture and the emergence of new service scenarios, the technical schemes provided by the embodiments of the present disclosure are equally applicable to similar technical problems.

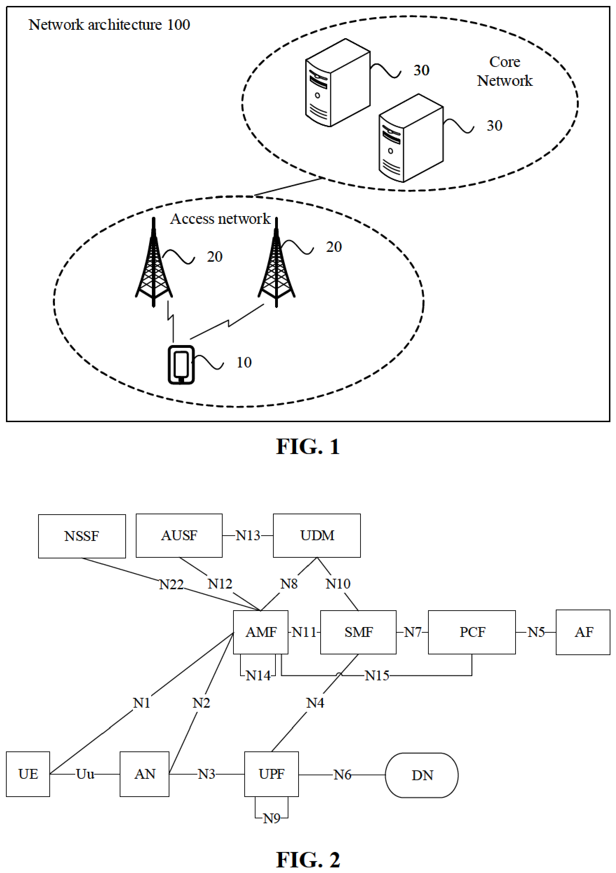

Referring to FIG. 1, FIG. 1 shows a schematic diagram of a network architecture 100 according to one embodiment of the present disclosure. The network architecture 100 may include a terminal device 10, an access network device 20, and a core network element 30.

The terminal device 10 may refer to a User Equipment (UE), an access terminal, a user unit, a user station, a mobile site, a mobile station, a remote station, a remote terminal, a mobile device, a wireless communication device, a user agent, or a user device. In some embodiments, the terminal device 10 may also be a cellular phone, a cordless telephone, a Session Initiation Protocol (SIP) phone, a Wireless Local Loop (WLL) station, a Personal Digital Assistant (PDA), a handheld device having a wireless communication functionality, a computing device or other processing device connected to a wireless modem, a vehicle-mounted device, a wearable device, a terminal device in a 5th Generation System (5GS), or a terminal device in a future evolved Public Land Mobile Communication Network (PLMN). The embodiments of the present disclosure are not limited thereto. For convenience of description, the aforementioned devices are collectively referred to as terminal devices. The number of terminal devices 10 is typically multiple, and one or more terminal devices 10 may be distributed within a cell managed by each access network device 20. The terminal device may also be simply referred to as a terminal or a UE, and the meaning thereof can be understood by those skilled in the art.

The access network device 20 is a device deployed in an access network for providing wireless communication functionality for the terminal device 10. The access network device 20 may include various forms such as macro base stations, micro base stations, relay stations, access points, etc. In systems employing different wireless access technologies, the name of a device having the functionality of the access network device may be different; for example, in a 5G NR system, it is referred to as a gNodeB or gNB. As communication technologies evolve, the name "access network device" may change. For convenience of description, in the embodiments of the present disclosure, the aforementioned devices that provide wireless communication functionalities for the terminal device 10 are collectively referred to as access network devices. In some embodiments, a communication relationship may be established between the terminal device 10 and the core network element 30 through the access network device 20. Exemplarily, in a Long Term Evolution (LTE) system, the access network device 20 may be an Evolved Universal Terrestrial Radio Access Network (EUTRAN) or one or more eNodeBs in the EUTRAN. In the 5G NR system, the access network device 20 may be a Radio Access Network (RAN) or one or more gNBs in the RAN.

The core network element 30 is a network element deployed in the core network, and primary functionalities of the core network element 30 include providing user connection, managing users and completing bearer of services, which serves as a bearer network to provide an interface to an external network. For example, core network elements in the 5G NR system may include network elements such as an Access and Mobility Management Function (AMF) entity, a User Plane Function (UPF) entity, and a Session Management Function (SMF) entity.

In some embodiments, the access network device 20 and the core network element 30 communicate with each other through an air interface technology, such as a NG interface in the 5G NR system. The access network device 20 and the terminal device 10 communicate with each other through an air interface technology, such as a Uu interface.

The "5G NR system" in the embodiments of the present disclosure may also be referred to as a 5G system or an NR system, but those skilled in the art can understand the meaning thereof. The technical schemes described in the embodiments of the present disclosure may be applicable to an LTE system, a 5G NR system, a subsequent evolved system of the 5G NR system (e.g., a Beyond 5G (B5G) system, a 6th Generation System (6G system), and other communication systems such as a Narrow Band Internet of Things (NB-IoT) system, which is not limited in the present disclosure.

In the embodiments of the present disclosure, the network device may provide a service for a cell, and the terminal device may communicate with the network device through a transmission resource (e.g., a frequency domain resource, or a spectrum resource) on a carrier used by the cell. The cell may be a cell corresponding to the network device (e.g., a base station), and the cell may belong to a macro base station or a base station corresponding to a Small cell.

Referring to FIG. 2, FIG. 2 shows a schematic diagram of a 5G network architecture according to an embodiment of the present disclosure. Herein, the UE establishes an access stratum connection with an Access Network (AN) through a Uu interface (also known as the LTE air interface), to interact an access layer message and perform wireless data transmission. Moreover, the UE establishes a Non-Access Stratum (NAS) connection with the AMF through a N1 interface, to interact a NAS message. In addition to the mobility management of the UE, the AMF is responsible for forwarding a session management-related message between the UE and the SMF. The Policy Control Function (PCF) is responsible for formulating policies related to mobility management, session management, charging, and the like for the UE, as well as interacting with an Application Function (AF) through a N5 interface. The UPF transmits data to an external Data Network (DN) through a N6 interface and transmits data to the AN through a N3 interface. In addition, the 5G network architecture also includes a Network Slice Selection Function (NSSF), an Authentication Server Function (AUSF), and a Unified Data Management (UDM).

Current cellular networks, including 5G networks, are used only for communications. However, the wireless electromagnetic wave signals used in cellular networks can be used not only for wireless data transmission and communication, but also have environmental sensing capabilities, such as user movement or gesture recognition, respiratory monitoring, terminal velocity measurement, environmental imaging, weather monitoring, etc. Therefore, the future cellular networks may be considered not only for communication and data transmission, but also for the acquisition of sensing information. Table 1 below lists some sensing information at different levels.

**Table 1**

| Sensing information at different levels | Content of sensing information |
|---|---|
| Received signal or original channel information | Complex result of received signal or channel response, amplitude/phase, orthogonal component/in-phase component of received signal and related operation result thereof |
| Basic measurement quantity | Time delay, Doppler shift, angle, signal strength, and multi-dimensional combined representation thereof |
| Basic attribute or state of a sensing target | Distance, velocity, orientation, acceleration, etc. |
| Advanced attribute or state of a sensing target | Presence, spatial position, trajectory, motion, expression, vital signs, quantity, imaging result, weather, air quality, shape, material, composition, etc. of the target |

In the integrated sensing and communication, the sensing capability focuses on wireless signal sensing. That is, by analyzing direct, reflected, refracted or scattered radio wave signals, the sensing of the environment and/or target object information (such as the attribute and state, etc.) in the environment can be acquired, the functions such as positioning, distance measurement, velocity measurement, imaging, detection, recognition, and environment reconstruction can be completed, and the sensing exploration of the physical world can be realized.

The sensing information can be acquired based on the measurement of the sensing signal, and the concept related to the measurement will be briefly introduced below.
I. Measurement: primarily refers to the mobility measurement of the UE in a connected state with the network. After the network transmits measurement configuration to the UE, the UE detects a signal quality state of a neighbor cell based on the parameters such as a measurement object and reporting configuration indicated in the measurement configuration, and further feeds back the measurement reporting information to the network, which enables the network to switch or refine a neighbor cell relationship list.
II. Measurement configuration: in 5G NR, the network transmits, through Radio Resource Control (RRC) signaling, measurement configuration information to the UE in the connected state; and the UE performs measurement (intra-frequency measurement, inter-frequency measurement, inter-system technology measurement) based on the content of the measurement configuration information, and then reports the measurement result to the network.

The measurement configuration information may include the following content.
1. Measurement Object: for the intra-frequency measurement and inter-frequency measurement, each measurement object indicates a time-frequency position and a subcarrier spacing of a reference signal to be measured. For the cell related to the measurement object, the network may configure a cell Offset list, a blacklist cell list and a whitelist cell list. For the inter-system measurement, each measurement object corresponds to a separate Evolved-UMTS Terrestrial Radio Access (E-UTRA) frequency point. For the cell related to the E-UTRA frequency point, the network may configure a cell Offset list, a blacklist cell list and a whitelist cell list. The UE does not perform any operation on the blacklisted cells in event evaluation and measurement reporting. The UE performs the event evaluation and measurement reporting on the whitelisted cells. For each measurement frequency point, the time at which the UE receives a Synchronization Signal and PBCH block (abbreviated as "synchronization signal block", SSB) on a neighbor cell corresponding to the frequency point is indicated by an SSB Measurement Timing Configuration (SMTC) configured by the network. The SMTC configuration includes a period of the SMTC, a starting time offset of the SMTC in one period, duration of the SMTC, and the like.
2. Reporting Configuration: each measurement object corresponds to one or more reporting configurations.

The reporting configuration includes the following.
(1) Reporting Criterion: a triggering condition for the UE to perform the measurement reporting, which may be periodic triggering reporting or event-triggering reporting.
   Reference Signal (RS) type: the RS used by the UE for beam and cell measurement, which may be an SSB or a Channel State Information-Reference Signal (CSI-RS).
(2) Reporting Format: the measurement reporting quantity (such as RSRP) of the UE for each cell and each beam also includes other related information, such as the maximum number of cells reported by the UE and the maximum number of beams reported for each cell.
(3) Measurement Identity: a separate ID (Identity) that associates the measurement object with the reporting configuration. One measurement object may be associated with a plurality of reporting configurations at the same time, and one reporting configuration may also be associated with a plurality of measurement objects at the same time, which are distinguished by measurement identifiers.
(4) Measurement Gap: the measurement gap is used to indicate the time at which the UE performs the inter-frequency measurement/inter-system measurement. The UE performs the inter-frequency measurement/inter-system measurement during the measurement gap. The measurement gap configuration includes a period of the measurement gap, a starting time offset of the measurement gap within a period, duration of the measurement gap, and the like.

III. Measurement reporting: the UE performs the measurement based on the measurement configuration issued by the network; when a certain trigger condition is satisfied, the UE evaluates the measurement reporting; and if a reporting condition is satisfied, the UE fills out a measurement report and further transmits the contents included in the measurement report to the network. The measurement reporting is categorized into three types: event triggering, periodic reporting and event-triggering periodic reporting.

Sensing may include active sensing and passive sensing. The passive sensing refers to a process in which a sensing node (the network side or terminal) performs the sensing by acquiring electromagnetic waves (e.g., terahertz waves) emitted by a target object or by reflecting electromagnetic waves from sources outside both the sensing node and the target object, such as passive imaging sensing technology. The active sensing refers to a process in which a sensing transmitting node (the network side or terminal) transmits electromagnetic waves; after the electromagnetic waves are reflected by the target object, the sensing receiving node receives the echo for sensing, such as the active radar sensing technology in which the probe signal(s) are transmitted. Herein, the node for receiving the reflected waves is not necessarily the node that transmits the probe signal(s), that is, multiple nodes of the sensing party can achieve active sensing through some form of joint processing.

The application of integrated sensing and communication has a variety of scenarios, which can be categorized into a device-based sensing and communication scenario and a device-free sensing and communication scenario based on whether the sensing target has the capability to transmit or receive signal(s). For example, in flight path management, beam management of the base station and terminal, drones and terminals as the sensing targets are user equipment with signal transmission or reception capabilities, which belong to the device-based sensing and communication scenario. In weather monitoring and respiration monitoring, rainfall and humans as the sensing targets do not have the capability to transmit or receive signal(s), which belongs to the device-free sensing and communication scenario.

From the perspective of sensing applications, the sensing may categorized as the following:
outdoor, wide-area or local-area applications: including smart city (such as weather monitoring), smart transportation/high-speed rail (such as high-precision map construction, road supervision, intrusion detection), low-altitude applications (such as drone monitoring and obstacle avoidance, flight intrusion detection, flight path management), etc.;
indoor or local-area applications: including smart home and health management (such as respiration monitoring, intrusion detection, gesture/posture recognition, motion monitoring, movement trajectory tracking), smart factory (such as intrusion detection, material detection, article defect detection), etc.

The above examples are merely exemplary, and some classifications of the sensing applications are provided. The scope of the sensing application areas is not limited to such examples.

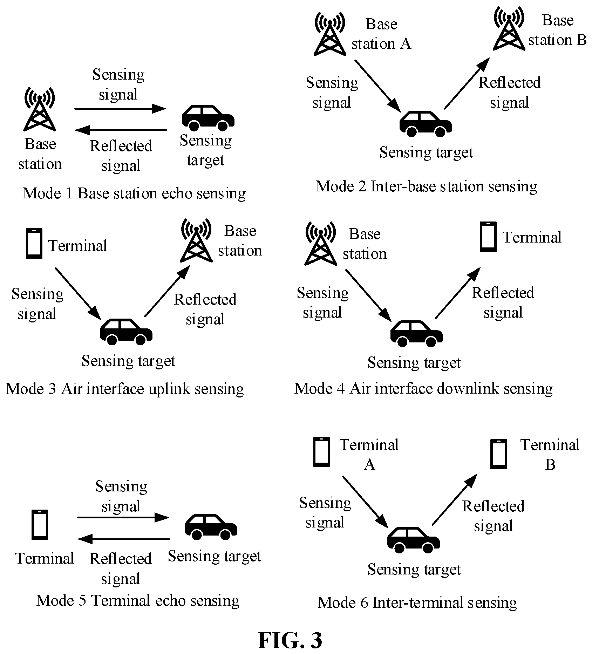

The sensing can be categorized into six modes as shown in FIG. 3.

Mode 1, base station echo sensing: a base station transmits a sensing signal and receives an echo signal. That is, the base station transmits a sensing signal; and after the sensing signal is reflected by a sensing target, the same base station receives the echo signal (i.e., the sensing signal reflected by the sensing target).

Mode 2, inter-base station sensing: one base station (e.g., the base station A in FIG. 3) transmits a sensing signal, and another base station (e.g., the base station B in FIG. 3) receives the sensing signal. That is, one base station transmits the sensing signal; and after being reflected by a sensing target, the sensing signal is received by another base station.

Mode 3, air interface uplink sensing: a base station receives a sensing signal transmitted by a terminal. That is, the terminal transmits the sensing signal; and after being reflected by a sensing target, the sensing signal is received by the base station.

Mode 4, air interface downlink sensing: a terminal receives a sensing signal transmitted by a base station. That is, the base station transmits the sensing signal; and after being reflected by a sensing target, the sensing signal is received by the terminal.

Mode 5, terminal echo sensing: a terminal transmits a sensing signal and further receives an echo signal. That is, the terminal transmits the sensing signal; and after the sensing signal is reflected by a sensing target, the same terminal receives the echo signal.

Mode 6, inter-terminal sensing: one terminal (e.g., the terminal A in FIG. 3) transmits a sensing signal, and another terminal (e.g., the terminal B in FIG. 3) receives the sensing signal. That is, one terminal transmits the sensing signal; and after being reflected by a sensing target, the sensing signal is received by another terminal.

Among the above six modes, the terminal echo sensing and the inter-terminal sensing may be referred to as the terminal sensing mode; the air interface uplink sensing and the air interface downlink sensing may be referred to as the cooperative sensing mode; and the base station echo sensing and the inter-base station sensing may be referred to as the base station sensing mode.

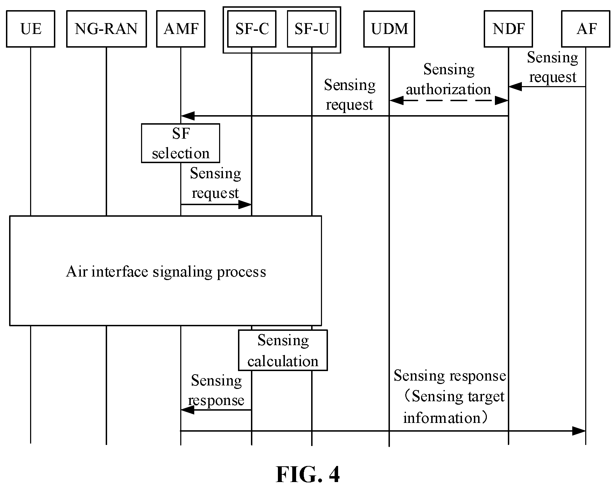

Referring to FIG. 4, FIG. 4 shows a schematic diagram of a sensing scheme. In the sensing process shown in FIG. 4, a sensing request is triggered by an AF, as such, the sensing process is also referred to as an AF-triggered sensing process. The sensing request belongs to a Mobile Terminated-Sensing Request (MT-SR). In such process, the AF transmits the sensing request to a Network Exposure Function (NEF), the NEF and the UDM may complete authorization for the sensing process. Moreover, the AMF may select a Sensing Function (SF) and forward the sensing request to the SF (such as the SF-C and SF-U in FIG. 4) that controls the sensing process. Subsequently, at least one of the UE, the Next Generation Radio Access Network (NG-RAN), and the core network elements (including the AMF and the SF) participates in the air interface signaling process related to the sensing. Finally, after the SF performs further calculation on the sensing information acquired through the above air interface signaling process, the sensing result (the sensing target information) may be fed back to the AF through the AMF.

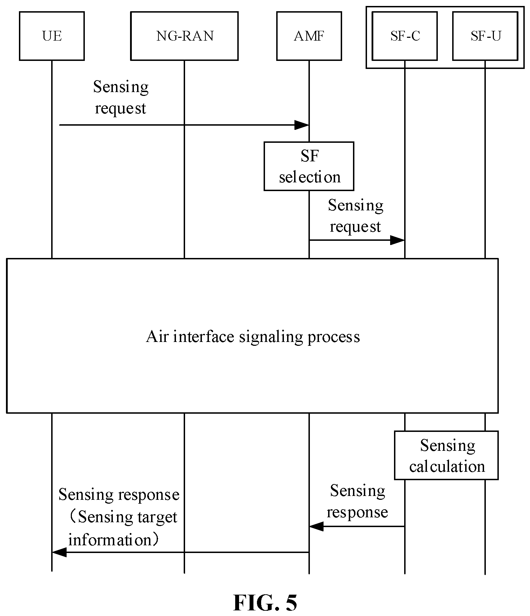

Referring to FIG. 5, FIG. 5 shows a schematic diagram of another sensing scheme. In the sensing process shown in FIG. 5, the sensing request is triggered by the UE, and the sensing request belongs to a Mobile Originated-Sensing Request (MO-SR). In such process, after the UE transmits the sensing request to the SF through the AMF and further performs the corresponding air interface signaling process, the final sensing result may be fed back to the UE.

In addition to the aforementioned MT-SR and MO-SR, the sensing request also includes a Network Induced-Sensing Request (NI-SR) triggered by internal network elements of the network.

According to different interactive network elements, the above air interface signaling process can be categorized as the following: signaling interaction between the core network element and the base station, signaling interaction between the core network element and the terminal, signaling interaction between the base station and the terminal, and signaling interaction between terminals. Since the types of devices participating in sensing are different in different sensing modes, the air interface signaling processes required in different sensing modes are also different. Referring to Table 2, Table 2 shows the air interface signaling processes that may need to be performed in different sensing modes. In Table 2, only the core network element of the SF is taken as an example for illustration.

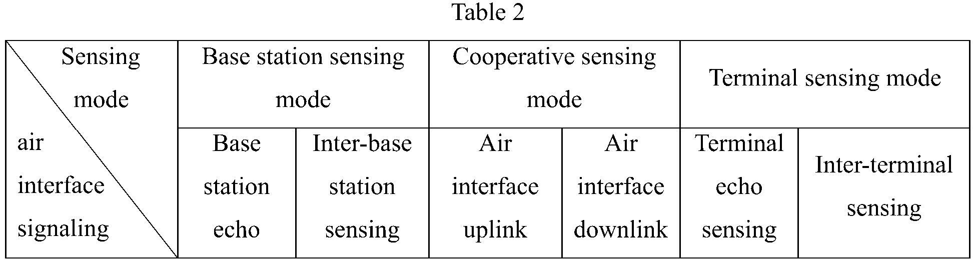

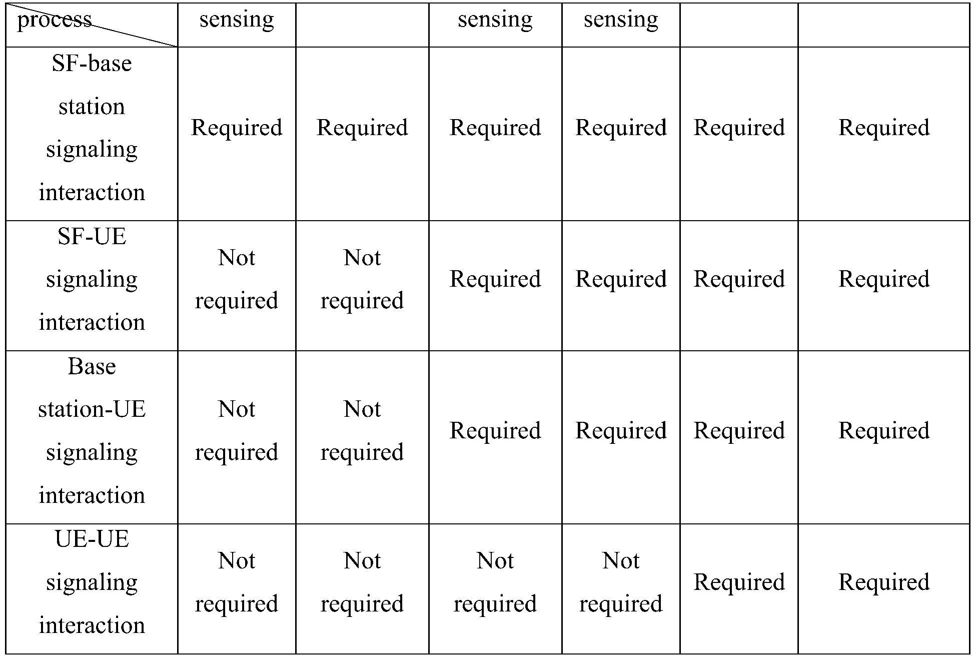

Hereinafter, the air interface signaling process in the aforementioned sensing scheme is introduced by taking the terminal sensing mode (i.e., terminal echo sensing and inter-terminal sensing) as an example.

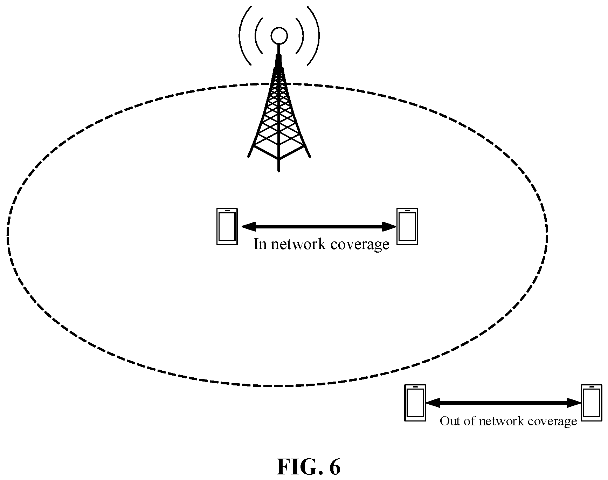

For the terminal sensing mode, the sensing process design needs to consider different network coverage scenarios in which the terminal is located. Specifically, as shown in FIG. 6, two primary scenarios of In Coverage (IC) and Out Of Coverage (OOC) can be given priority.

For the IC scenario, as shown in FIG. 4, the SF and other core network elements may participate in the sensing process as the sensing control nodes. The sensing control nodes play a role in controlling and managing the sensing process, and may perform further calculation on the measured sensing information.

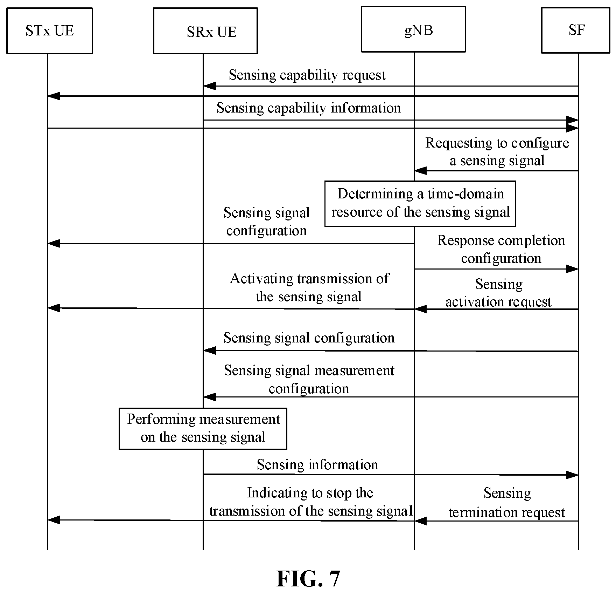

Referring to FIG. 7, FIG. 7 shows a schematic diagram of an air interface signaling interaction of terminal echo sensing controlled by the SF.

During the terminal echo sensing process, the SF instructs the gNB to configure a time-frequency resource of the sensing signal, a Sensing Receiving UE (SRx UE) performs measurement on the sensing signal transmitted by a Sensing Transmitting UE (STx UE), and further reports the measured sensing information to the SF.

It can be seen that, in the terminal sensing mode, the STx UE is responsible for transmitting the sensing signal, and the SRx UE is responsible for receiving and measuring the sensing signal. Specifically, for the terminal echo sensing, the STx UE and the SRx UE are the same UE. In addition, in the OOC scenario where the network coverage is unavailable, the core network element cannot function as the sensing control node to control the sensing process. In such case, a Sensing Server UE (SS UE) can be introduced as the sensing control node. The SS UE may undertake some functions of the SF, such as sensing measurement quantity processing. The SS UE may be one of the STx UE and the SRx UE, or may be independent.

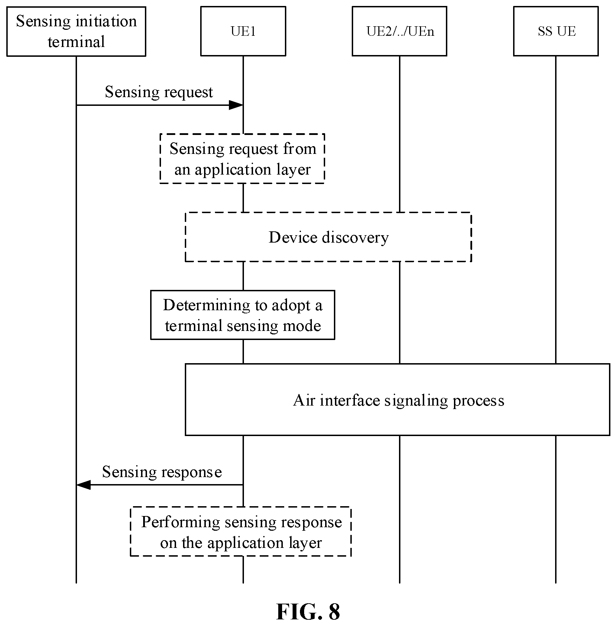

Referring to FIG. 8, FIG. 8 shows a schematic diagram of a sensing service for UE-only Operation. The sensing service is mainly for an OOC scenario or a scenario in which the network does not support the sensing service.

In the sensing service, the sensing initiator (such as the sensing initiating terminal in FIG. 8), the participant (such as UE1, UE2, ... , UEn in FIG. 8), and the sensing control node (such as the SS UE in FIG. 8) are all terminal devices. Thus, the entire sensing process does not involve signaling interaction between the terminal and the network device, making it is applicable to the OOC scenario.

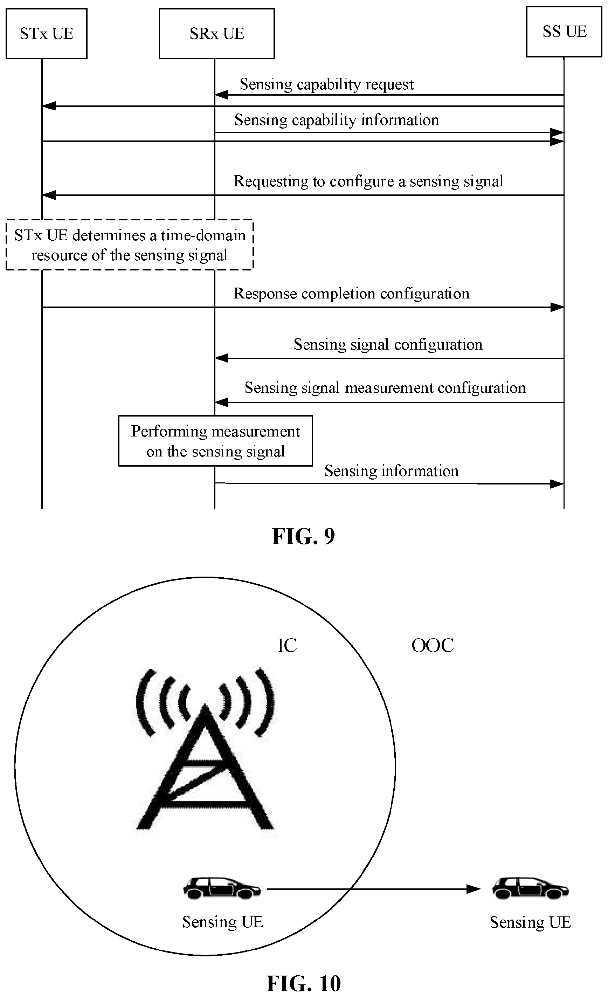

Furthermore, referring to FIG. 9, FIG. 9 shows a schematic diagram of air interface signaling interaction of inter-terminal sensing controlled by a sensing server terminal.

During the inter-terminal sensing process, the sensing server terminal instructs the sensing transmitting terminal to configure a time-frequency resource of the sensing signal, the sensing receiving terminal performs measurement on the sensing signal transmitted by the sensing transmitting terminal, and further reports the measured sensing information to the sensing server terminal.

In some sensing scenarios, the sensing node (the sensing transmitting/receiving node) or the sensing target may be in movement. Especially when the terminal serves as the sensing node, that is, in the sensing modes such as the inter-terminal sensing, the terminal echo sensing, the air interface uplink sensing, and the air interface downlink sensing, the sensing service may be affected or even interrupted due to the movement of the sensing node or sensing target.

As can be seen from the above, the terminal has two different coverage scenarios of IC and OOC, and the sensing in different coverage scenarios has different sensing interaction processes. For example, the sensing process based on the SF control may be provided in the IC scenario. In the OOC scenario, only the autonomous sensing process of UE (based on the Sensing Server UE) can be supported. In addition, in terms of the supported sensing modes, all sensing modes may be supported in the IC scenario. However, in the OOC scenario, since the gNB cannot be used as the sensing node, only the sensing modes of the inter-terminal sensing and the terminal echo sensing can be supported.

Therefore, when the sensing UE (the sensing transmitting/receiving terminal) moves between the IC and the OOC, as shown in FIG. 10, the significant differences between the IC and the OOC described above may cause that the continuity of the sensing service cannot be guaranteed. Consequently, when the sensing UE (the sensing transmitting/receiving terminal) moves between the IC and the OOC, it is necessary to consider the switching of different sensing modes and sensing processes, as well as changes of sensing control nodes (such as the SF and Sensing Server UE), which will be described in detail in the following embodiments.

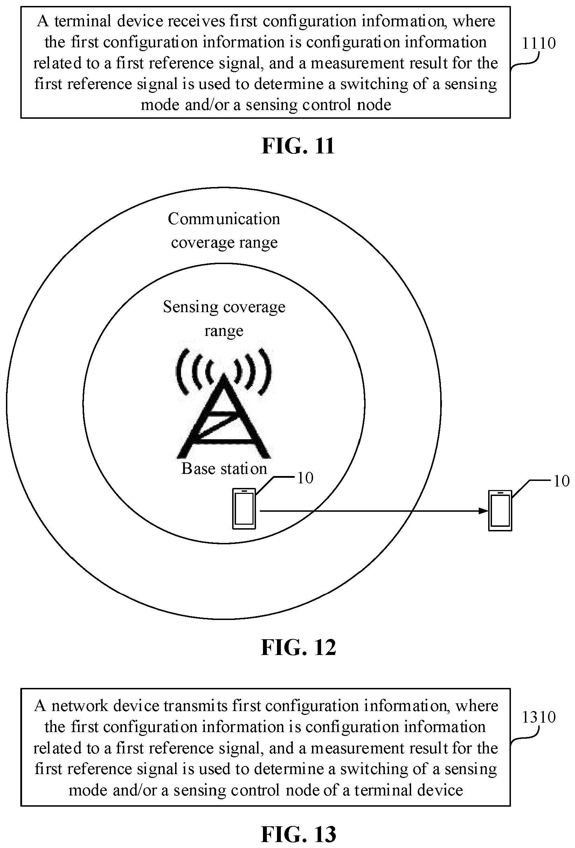

Referring to FIG. 11, FIG. 11 shows a flowchart of a sensing control method according to an embodiment of the present disclosure. Each operation of the method is performed by a terminal device, and the method includes the following operation 1110.

At block 1110, the terminal device receives first configuration information. The first configuration information is configuration information related to a first reference signal, and a measurement result for the first reference signal is used to determine a switching of a sensing mode and/or a sensing control node.

In some embodiments, the terminal device may receive the first configuration information transmitted by a network device. In some embodiments, the terminal device may receive the first configuration information transmitted by an access network device, or the terminal device may receive the first configuration information transmitted by a core network element.

In an embodiment of the present disclosure, the network device may be an access network device or a core network element. Further, the access network device may include an access network device of a serving cell of the terminal device and/or an access network device of at least one neighbor cell of the serving cell. The core network element may include a network element such as an AMF, an SF, and a Location Management Function (LMF).

In some embodiments, the first reference signal may be a sensing signal corresponding to a sensing service. For example, the sensing signal may be a Sensing Reference Signal, and accordingly, the first reference signal may also be a Sensing Reference Signal.

In other embodiments, the first reference signal may be any reference signal different from the sensing signal. For example, the first reference signal may be a reference signal such as a Positioning Reference Signal (PRS), an SSB, and a CSI-RS.

The measurement result of the first reference signal may be any information that can be used to determine the state of the terminal device. For example, the measurement result may be a distance between the terminal device and the network device, and may also be a Reference Signal Receiving Power (RSRP) of the first reference signal. Those skilled in the art should understand that the measurement result acquired by the device (the terminal device/network device) performing the measurement on the signal is affected by the device's capabilities for perform sensing, measurement, and calculation. The present disclosure is not limited thereto. Furthermore, description of the state of the terminal device described above can be described in the following embodiments, and the description thereof will not be repeated herein.

In some embodiments, the first configuration information may be measurement configuration information for the first reference signal, and may include a time-frequency resource configuration, a measurement quantity, a measurement period, a reporting configuration (event-triggering reporting, periodic reporting), and the like of the first reference signal. The terminal device may measure, based on the first configuration information, the first reference signal transmitted by at least one cell, and acquires the measurement result. Herein, the at least one cell includes a serving cell of the terminal device and/or at least one neighbor cell of the serving cell. In some embodiments, the first configuration information and the third configuration information may be transmitted in the same message to reduce signaling overhead. The third configuration information may be measurement configuration information for the sensing signal, including the time-frequency resource configuration, the measurement quantity, the measurement period, the reporting configuration (event-triggering reporting, periodic reporting), and the like of the sensing signal. Exemplarily, the first configuration information and the third configuration information may be carried by using Provide Sensing Assistance Data and/or a Sensing Information Request message of the SF through NAS signaling. In addition, it should be noted that when the first reference signal is the sensing signal, the first configuration information and the third configuration information are not necessarily the same. That is, two different measurement configurations may be adopted to measure the sensing signal; one of the two measurement results that are acquired may be used for completing the sensing service, and another one may be used for determining the switching of the sensing mode and/or the sensing control node. Therefore, in some embodiments, the measurement of the sensing signal may be divided into "measurement for the purpose of sensing" and "measurement for the purpose of ensuring sensing continuity".

In an embodiment of the present disclosure, a signal transmitted by a cell refers to a signal transmitted by an access network device of the cell.

In some other embodiments, the first configuration information may be configuration information for the first reference signal, and the first configuration information may be used to indicate the time-frequency resource configuration of the first reference signal. The terminal device transmits the first reference signal based on the first configuration information, and the aforementioned measurement result is acquired by measuring the first reference signal by the access network device of at least one cell. In some embodiments, the first configuration information and the fourth configuration information may be transmitted in the same message, and the fourth configuration information may be configuration information for the sensing signal.

In some embodiments, the terminal device may receive a first message transmitted by the network device, the first message being used to notify the terminal device to switch the awareness mode and/or the awareness control node.

In some embodiments, the first message may be transmitted by a core network element, such as an SF.

In some embodiments, the first message may be used to indicate at least one of the following: a sensing mode to which is switched; a sensing control node to which is switched; a sensing participation node corresponding to a sensing mode to which is switched; or sensing signal configuration information corresponding to a sensing mode to which is switched. The sensing participation node may include a sender of the sensing signal and a receiver of the sensing signal. For example, the first message may indicate that the terminal device switches from the cooperative sensing mode to the terminal sensing mode (e.g., from the air interface downlink sensing to the inter-terminal sensing). The first message may indicate identification information (e.g., ID information such as Application Layer ID and Layer-2 ID) of the sensing server terminal as the sensing control node to which the sensing transmitting terminal and the sensing receiving terminal in the air interface downlink sensing mode are switched. Additionally, the first message may also indicate configuration information for the sensing signal after the sensing mode and/or the sensing control node is switched.

In some embodiments, the first message may be included in Provide Sensing Assistance Data and/or a Sensing Information Request message. In other embodiments, the first message may be included in an RRC Reconfigure or RRC Release message.

In some embodiments, in a case where the measurement result satisfies a condition, the switching of the sensing mode and/or the sensing control node may be triggered.

In some embodiments, the above condition may include at least one of the following: a threshold value corresponding to a signal quality of the first reference signal, for example, a threshold value of a RSRP corresponding to the first reference signal; a threshold value corresponding to a change amount of a signal quality of the first reference signal, for example, a threshold value of the change amount in the RSRP corresponding to the first reference signal; time information, for example, a preconfigured time duration; location information, for example, area information with network coverage (e.g., one or more sets of "cell center point coordinates and cell radius", one or more sets of "multiple vertex coordinates of polygon areas with network coverage").

In some embodiments, the above condition may be used to determine at least one of the following: the terminal device entering an outside of coverage from an inside of the coverage; the terminal device being about to enter an outside of coverage from an inside of the coverage; the terminal device entering an inside of coverage from an outside of the coverage; or the terminal device being about to enter an inside of coverage from an outside of the coverage.

For a scenario in which the terminal device enters the outside of the coverage from the inside of the coverage, exemplarily, when the RSRP of the first reference signal (corresponding to the serving cell and the neighbor cell of the terminal device respectively) in the measurement result is less than a threshold value, it may be determined that the terminal device enters (is about to enter) the outside of the coverage from the inside of the coverage. Alternatively, when the RSRP of the first reference signal remains below the threshold value for a preconfigured time duration, it may be determined that the terminal device enters (is about to enter) the outside of the coverage from the inside of the coverage. Alternatively, when the decrease in the RSRP of the first reference signal over the preconfigured time duration exceeds the threshold value, it may be determined that the terminal device enters (is about to enter) the outside of the coverage from the inside of the coverage. Alternatively, the determination may be made based on the area location in which the terminal device itself is located in the measurement result and the area information with network coverage, for example, when the area location in which the terminal device is located in the measurement result is outside the network coverage area indicated by the area information, it may be determined that that the terminal device enters (is about to enter) the outside of the coverage from the inside of the coverage. For another example, when the area location in which the terminal device is located in the measurement result remains outside the network coverage area indicated by the area information for the preconfigured time duration, it may be determined that the terminal device enters (is about to enter) the outside of the coverage from the inside of the coverage.

For a scenario in which the terminal device enters the inside of the coverage from the outside of the coverage, exemplarily, when the RSRP of the first reference signal in the measurement result is greater than a threshold value, it may be determined that the terminal device enters (is about to enter) the inside of the coverage from the outside of the coverage. Alternatively, when the RSRP of the first reference signal remains higher than the threshold value for a preconfigured time duration, it may be determined that the terminal device enters (is about to enter) the inside of the coverage from the outside of the coverage. Alternatively, when the increase in the RSRP of the first reference signal over the preconfigured time duration exceeds the threshold value, it may be determined that the terminal device enters (is about to enter) the inside of the coverage from the outside of the coverage. Alternatively, the determination may be made based on the area location in which the terminal device itself is located in the measurement result and the area information with network coverage, for example, when the area location in which the terminal device is located in the measurement result is within the network coverage area indicated by the area information, it may be determined that the terminal device enters (is about to enter) the inside of the coverage from the outside of the coverage. For another example, when the area location in which the terminal device is located in the measurement result remains within the network coverage area indicated by the area information for the preconfigured time duration, it may be determined that the terminal device enters (is about to enter) the inside of the coverage from the outside of the coverage. Alternatively, based on cell selection S criterion, when the terminal device re-resides in a cell, it may be determined that the terminal device enters (is about to enter) the inside of the coverage from the outside of the coverage. In addition, it should be added that, in the above-described scenarios, it may involve measuring the first reference signal corresponding to the plurality of cells. Therefore, according to the aforementioned method, it is also possible to determine the serving cell of the terminal device in a scenario in which the serving cell of the terminal device enters the inside of the coverage from the outside the coverage. For example, among the plurality of cells, the cell having the highest RSRP of the corresponding first reference signal is determined as the serving cell.

It should be noted that only the first reference signal corresponding to the serving cell of the terminal device can be measured, and only the location of the terminal device with respect to the serving cell can be determined. When it is determined entering the inside of the coverage from the outside of the coverage, it is also necessary to combine the measurement result acquired by measuring the first reference signal corresponding to the neighbor cell of the serving cell. That is, only when the measurement results corresponding to both the serving cell and the neighbor cell satisfy the out-of-coverage condition at the same time, it can be determined that the terminal device is out of coverage.

In some embodiments, the first reference signals corresponding to the serving cell and the neighbor cell of the terminal device may be measured. When the acquired measurement results both satisfy the condition of entering (being about to enter) the outside of the coverage from the inside of the coverage, it is determined that the terminal device enters (is about to enter) the outside of the coverage from the inside of the coverage. When the measurement result corresponding to the serving cell satisfies the condition of entering (being about to enter) the outside of the coverage from the inside of the coverage, and the measurement result corresponding to the neighbor cell satisfies the condition of entering (being about to entering) the inside of the coverage from the outside of the coverage, the serving cell of the terminal device is switched to the neighbor cell.

Exemplarily, if a cell 1 is the serving cell of the terminal device, the neighbor cells of the cell 1 are a cell 2 and a cell 3. When the RSRPs of the first reference signals corresponding to the cell 1, the cell 2 and the cell 3 in the measurement result are all less than the threshold value, it may be determined that the terminal device enters (is about to enter) the outside of the coverage from the inside of the coverage. When, in the measurement result, the RSRPs of the first reference signals corresponding to the cell 1 and the cell 2 is both less than the threshold value, and the RSRP of the first reference signal corresponding to the cell 3 is greater than the threshold value, it may be determined that the terminal device has entered the network coverage range of the cell 3, and the serving cell of the terminal device is switched to the cell 3. To sum up, according to the aforementioned method, it is possible to effectively determine the network coverage scenario in which the terminal device is located, and also to timely switch and select the serving cell of the terminal device.

The foregoing inside of the coverage and outside of the coverage refer to being in the network coverage and out of the network coverage, that is, the IC scenario and the OOC scenario described above. Further, referring to FIG. 12, when a network device (such as a base station) interacts with the terminal device 10, since the communication mainly depends on the direct-path wireless signal(s), and the sensing mainly depends on analyzing the environment and/or the reflected and scattered echo signal(s) of the target object in the environment, for the network device, the sensing coverage of the network device is smaller than the communication coverage. Moreover, in the sensing mode in which the terminal device 10 participates, when the terminal device 10 is located within the sensing coverage range, the network device may serve as a sensing participation node to participate in the transmission and reception of the sensing signal. When the terminal device 10 is located out of the sensing coverage range and within the communication coverage range, the network device can only be used for transmission of the control signaling during the sensing process, and can no longer participate in the transmission and reception of the sensing signal. When the terminal device 10 is located out of the communication coverage range, the network device can neither participate in the sensing nor the communication with the terminal device 10.

In the embodiments of the present disclosure, the inside of the coverage and the outside of the coverage may refer to being in the sensing coverage and out of the sensing coverage; or being in the communication coverage and out of the communication coverage. Those skilled in the art may set two different conditions to determine the above two cases; or only one case may be considered, and the present disclosure is not limited thereto.

Exemplarily, in a case where the terminal device is about to enter the outside of the sensing coverage from the inside of the sensing coverage, the cooperative sensing mode may be triggered to switch to the terminal sensing mode. In a case where the terminal device is about to enter the outside of the communication coverage from the inside of the communication coverage, the sensing control node may be triggered from the core network element to the sensing server terminal. In a case where the terminal device enters the inside of the communication coverage from the outside of the communication coverage, the sensing control node may be triggered from the sensing server terminal to the core network element. In a case where the terminal device enters the inside of the sensing coverage from the outside of the sensing coverage, the terminal sensing mode is triggered to switch to the cooperative sensing mode.

In some embodiments, the terminal device may autonomously determine the switching of the sensing mode and/or the sensing control node. For example, the terminal device independently switches the sensing mode and/or the sensing control node based on the configuration information of various different sensing modes stored in the terminal device as well as the identification information of various devices that can serve as the sensing control nodes.

In some embodiments, the operation of triggering the switching of the sensing mode and/or the sensing control node may include the following.
1. The terminal device transmits a second message to the network device, where the second message is used to indicate that a state change of the terminal device occurs.

The state change of the terminal device may include: entering the outside of coverage from the inside of the coverage; being about to enter the outside of the coverage from the inside of the coverage; entering the inside of the coverage from the outside of the coverage; and being about to enter the inside of the coverage from the outside of the coverage. Specific descriptions of the inside and outside of the coverage can be seen in the above embodiments, and will not be repeated herein.

In some embodiments, the second message may be further used to: request the network device to pre-configure a sensing server terminal or a list of sensing server terminals; request the network device to switch the sensing control node from the core network element to the sensing server terminal; and request the terminal device itself to become the sensing server terminal.

2. The terminal device may receive a first message transmitted by the network device, where the first message is used to notify the terminal device to switch the sensing mode and/or the sensing control node.

In some embodiments, after triggering the switching of the sensing mode and/or the sensing control node, the terminal device may instruct the access network device to stop the transmission or measurement of the sensing signal.

In some embodiments, after autonomously determining the switching of the sensing mode and/or the sensing control node, the terminal device may indicate to the sensing control node (the core network element or sensing server terminal) before the switching that the sensing control node has changed, and further instruct the access network device to stop the transmission or measurement of the sensing signal.

In some embodiments, the terminal device may receive second configuration information transmitted by the network device, where the second configuration information is used to configure the condition for triggering the switching of the sensing mode and/or the sensing control node.

In some embodiments, the second configuration information may be further used to configure at least one of the following: configuration information of a preconfigured sensing mode, for example, configuration information of the sensing participation node and the sensing signal corresponding to each sensing mode; or, identification information of a preconfigured sensing control node, for example, identification information of the sensing server terminal.

In some embodiments, the first configuration information and the second configuration information may be transmitted in a same message. Alternatively, the first configuration information and the second configuration information may be transmitted in different messages.

In some embodiments, the measurement result and the sensing information corresponding to a sensing service may be independently reported to the network device. Alternatively, the measurement result may be reported to the network device together with the sensing information corresponding to the sensing service. Exemplarily, the measurement result and the sensing information may be reported by the terminal device to the access network device and/or the core network element, or may be reported by the access network device to the core network element.

In some embodiments, in a case where the measurement result is reported to the network device together with the sensing information corresponding to the sensing service, when reporting configuration for the measurement result is satisfied, it is determined, based on whether the sensing information is triggered to be reported, whether to report the measurement result to the network device together with the sensing information. In some embodiments, the measurement result is not reported in a case where the sensing information is not triggered to be reported. In a case where the sensing information is triggered to be reported, the unreported (and latest) measurement result may be reported to the network device together with the sensing information. In some embodiments, the latest measurement result may be saved during a process of waiting for triggering the sensing information to be reported. That is, during the process of waiting for triggering the sensing information to be reported, the latest measurement result that satisfies the reporting configuration and has not been reported may be saved. The latest measurement result refers to the measurement result acquired by the terminal device or the access network device from the most recent measurement of the first reference signal relative to the current time moment.

In some embodiments, the terminal device may transmit or receive a sensing request for initiating the sensing service, where the sensing request includes first indication information, and the first indication information is used to indicate whether the sensing service has a continuity requirement.

In some embodiments, the terminal device may transmit a sensing request to the network device; or, the terminal device may serve as a sensing server terminal to receive a sensing request transmitted by another terminal device.

In some embodiments, the terminal device may transmit the sensing request to a core network element (as a sensing control node).

In some embodiments, the sensing request may include at least one of the following: a sensing service type, for example, service type information that distinguishes a sensing scenario use case, such as intrusion detection, weather monitoring, and drone identification; characteristics such as periodicity, non-periodicity, event triggering of the service; Quality of Service (QoS) requirements of the sensing service, such as position accuracy, velocity accuracy, sensing resolution, maximum sensing service delay, refresh rate, confidence level, missed detection rate, false alarm rate and other indicators; or, first indication information.

In addition, it should be noted that the first indication information may explicitly indicate in the sensing request that the sensing service needs to ensure the continuity of the sensing service; or may be implicitly indicated, for example, by indicating that the sensing service is periodic and has a high refresh rate requirement.

In some embodiments, the terminal device may transmit sensing capability information to the network device, where the sensing capability information includes second indication information, and the second indication information is used to indicate whether the terminal device supports or provides a capability related to continuity of the sensing service.

In some embodiments, the sensing terminal may receive the sensing capability request message transmitted by the network device, and further report the sensing capability information to the network device.

Exemplarily, the sensing capability information may include the following: a sensing signal transmission capability, a sensing signal measurement capability, a sensing signal processing capability, a supported sensing mode, and the like. The second indication information may indicate which reference signal the terminal device supports for measurement or reporting, and whether the terminal device supports reporting the sensing information together with the aforementioned measurement result.

According to the technical schemes provided by the embodiments of the present disclosure, the terminal device can receive the configuration information related to the first reference signal, realize the measurement for the first reference signal, and finally acquire the measurement result for determining the switching of the sensing mode and/or the sensing control node. Thereby, during the process of the sensing service, the sensing mode and/or the sensing control node can be enabled to be switched, which can ensure the continuity of the sensing service.

Additionally, it should be noted that, in some positioning services (such as NR SL positioning), the terminal device may serve as both the sensing target and the sensing participation node. In such case, the sensing control method provided by the embodiments of the present disclosure may also be applied to ensure the continuity of the positioning service.

Referring to FIG. 13, FIG. 13 shows a flowchart of a sensing control method according to another embodiment of the present disclosure. Each operation of the method is performed by a network device, and the method may include the following operation 1310.

At block 1310, the network device transmits first configuration information. The first configuration information is configuration information related to a first reference signal, and a measurement result for the first reference signal being used to determine a switching of a sensing mode and/or a sensing control node of a terminal device.

In some embodiments, the network device may transmit the first configuration information to the terminal device. In some embodiments, an access network device may transmit the first configuration information to the terminal device, or a core network element may transmit the first configuration information to the terminal device.

In some embodiments, the first configuration information may be the measurement configuration information for the first reference signal. The network device (such as the core network element) may receive the measurement result transmitted by the terminal device. Here, the measurement result is acquired by the terminal device measuring the first reference signal transmitted by at least one cell, and the at least one cell include a serving cell of the terminal device and/or at least one neighbor cell of the serving cell.

In other embodiments, the first configuration information may be the configuration information for the first reference signal. The network device may receive the measurement result transmitted by an access network device of at least one cell. Here, the measurement result is acquired by the access network device measuring the first reference signal transmitted by the terminal device. Exemplarily, the core network element, such as an SF, receives the measurement transmitted by the access network device of at least one cell. In some embodiments, before the access network device measures the first reference signal transmitted by the terminal device, the core network element may transmit measurement request information to the access network device, where the measurement request information is used to instruct the access network device to measure the first reference signal and/or the sensing signal. The measurement request information may include measurement configuration information for the first reference signal and/or the sensing signal, or may include measurement configuration information for performing measurement on the sensing signal for the purpose of sensing and/or for the purpose of ensuring sensing continuity.

In some embodiments, the core network element may determine, based on the measurement result, that a state change of the terminal device occurs. Alternatively, the core network element may receive third indication information transmitted by the access network device, where the third indication information is acquired by the access network device based on the measurement result, and the third indication information is used to indicate that a state change of the terminal device occurs.

In some embodiments, the network device may transmit a first message to the terminal device, where the first message is used to notify the terminal device to switch the sensing mode and/or the sensing control node.

In some embodiments, the core network element may transmit the first message to the terminal device.

In some embodiments, the first message may be used to indicate at least one of the following: a sensing mode to which is switched; a sensing control node to which is switched; a sensing participation node corresponding to a sensing mode to which is switched; or, sensing signal configuration information corresponding to a sensing mode to which is switched.

In some embodiments, the network device may transmit second configuration information to the terminal device, where the second configuration information is used to configure a condition for triggering the switching of the sensing mode and/or the sensing control node.

In some embodiments, the access network device may transmit the second configuration information to the terminal device.

In some embodiments, in a case where the measurement result satisfies the condition, the switching of the sensing mode and/or the sensing control node is determined by the terminal device autonomously.

In some embodiments, the operation of triggering the switching of the sensing mode and/or the sensing control node may include the following.
1. The network device receives a second message transmitted by the terminal device, where the second message is used to indicate that a state change of the terminal device occurs.

In some embodiments, the core network element may receive the second message transmitted by the terminal device.

2. The network device may transmit a first message to the terminal device, where the first message is used to notify the terminal device to switch the sensing mode and/or the sensing control node.

In some embodiments, the core network element may transmit the first message to the terminal device.

In some embodiments, the aforementioned condition may include at least one of the following: a threshold value corresponding to a signal quality of the first reference signal; a threshold value corresponding to a change amount of a signal quality of the first reference signal; time information; or location information.

In some embodiments, the second configuration information may be further used to configure at least one of the following: configuration information of a preconfigured sensing mode; or, identification information of a preconfigured sensing control node.

In some embodiments, the first configuration information and the second configuration information may be transmitted in a same message. Alternatively, the first configuration information and the second configuration information may be transmitted in different messages.

In some embodiments, the aforementioned condition may be used to determine at least one of the following: the terminal device entering an outside of coverage from an inside of the coverage; the terminal device being about to enter an outside of coverage from an inside of the coverage; the terminal device entering an inside of coverage from an outside of the coverage; or the terminal device being about to enter an inside of coverage from an outside of the coverage.

In some embodiments, the first configuration information may be used to configure at least one of the following: a time-frequency resource of the first reference signal; a measurement quantity for the first reference signal; a measurement period for the first reference signal; or reporting configuration for the measurement result.

In some embodiments, the first reference signal may be the sensing signal corresponding to a sensing service. Alternatively, the first reference signal may be different from the sensing signal corresponding to the sensing service.

In some embodiments, the network device may receive or transmit a sensing request for initiating the sensing service, where the sensing request includes first indication information, and the first indication information is used to indicate whether the sensing service has a continuity requirement.

In some embodiments, the core network element may receive the sensing request transmitted by the terminal device.

In some embodiments, the access network device may transmit the sensing request to the core network element.

In some embodiments, the network device may receive sensing capability information transmitted by the terminal device, where the sensing capability information includes second indication information, and the second indication information is used to indicate whether the terminal device supports or provides a capability related to continuity of the sensing service.

In some embodiments, the time-frequency resource of the first reference signal may be determined by an access network device of a serving cell of the terminal device and/or at least one neighbor cell of the serving cell.

In some embodiments, the core network element transmits a request message to the access network device for requesting the access network device to determine a time-frequency resource of the first reference signal and/or the sensing signal.

In some embodiments, the access network device may transmit a response message to the core network element, where the response message is used to indicate the time-frequency resource configuration for the first reference signal and/or the sensing signal.

According to the aforementioned method, the configuration information related to the first reference signal can be transmitted by the network device, the measurement for the first reference signal can be realized, and finally the measurement result for determining the switching of the sensing mode and/or the sensing control node can be acquired. Thereby, during the process of the sensing service, the sensing mode and/or the sensing control node can be enabled to be switched, which can ensure the continuity of the sensing service.

Hereinafter, through some embodiments, the sensing control schemes in which the terminal device enters the OOC scenario from the IC scenario will be described. It should be noted that, in the IC scenario described in the following embodiments, the cooperative sensing mode is used as the sensing mode adopted by the terminal device. Those skilled in the art should understand that the terminal sensing mode may also be adopted in the IC scenario, and the present disclosure only uses the cooperative sensing mode in the IC scenario as an illustrative example.

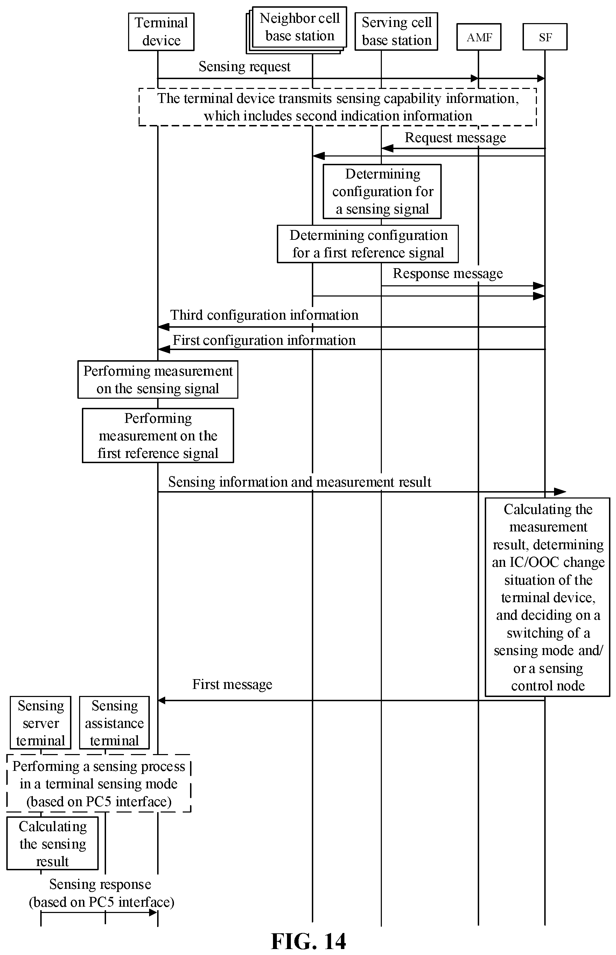

Referring to FIG. 14, FIG. 14 shows a schematic diagram of a sensing control scheme according to one embodiment of the present disclosure. The scheme is exemplified by using only the core network elements as the AMF and SF. The scheme includes the following operations, which may be arbitrarily combined.
1. The terminal device may transmit a sensing request to the core network element (transmit the sensing request to the SF through the AMF), where the sensing request includes the first indication information.
2. The terminal device may transmit sensing capability information to the access network device (the serving cell base station and the neighbor cell base station) and the core network element, where the sensing capability information includes second indication information.
3. The core network element may transmit a request message to the access network device, to request the access network device to configure the time-frequency resource of the sensing signal and the first reference signal. Further, the serving cell base station may configure the time-frequency resource of the sensing signal and the first reference signal, and the neighbor cell base station may configure the time-frequency resource of the first reference signal. Furthermore, the access network device may transmit a response message to the core network element to feed back the above configuration situation.
4. The core network element may transmit the first configuration information and the third configuration information to the terminal device. In some embodiments, the first configuration information and the third configuration information may be transmitted in the same message. Furthermore, the terminal device may perform measurement on the first reference signal based on the first configuration information, and acquire the measurement result. According to the third configuration information, the terminal device may perform measurement on the sensing signal to acquire the sensing information.
5. The terminal device may report the measurement result and the sensing information to the core network element, and the core network element may calculate the sensing result corresponding to the sensing service based on the sensing information. The core network element may determine, based on the measurement result, the state change (IC/OOC change) situation of the terminal device.
6. The core network element may transmit a first message to the terminal device.
7. The terminal device may switch to the terminal sensing mode based on the first message, determine the sensing server terminal and/or the sensing assistance terminal in the terminal sensing mode (e.g., the remaining terminals except the own terminal in the inter-terminal sensing mode), and further perform the corresponding sensing process, for example, a sensing capability interaction process, a sensing assistance information interaction process, a sensing measurement configuration, and a reporting process that are based on a PC5 interface.
8. The sensing server terminal may calculate the sensing result and perform the feedback.

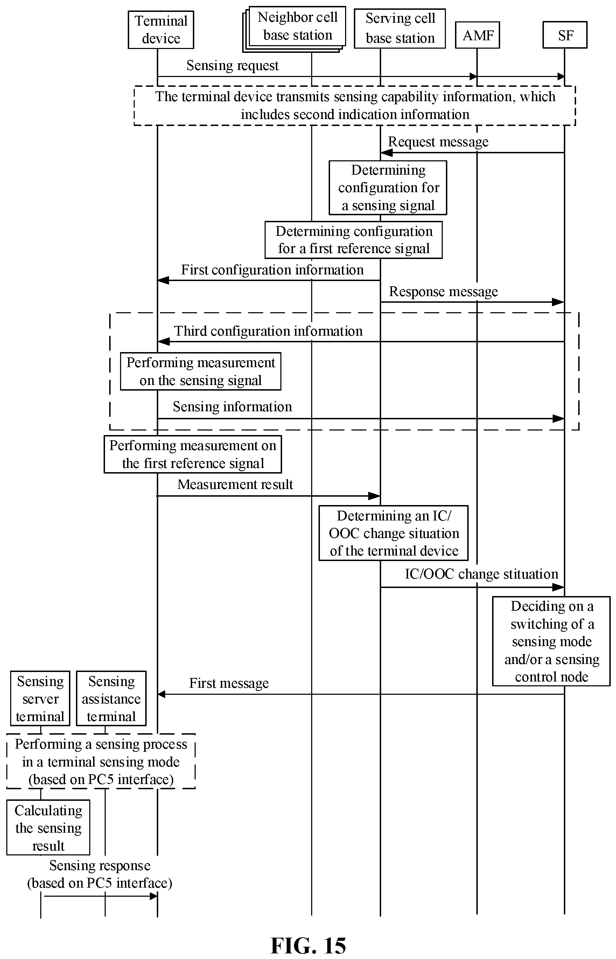

Referring to FIG. 15, FIG. 15 shows a schematic diagram of a sensing control scheme according to another embodiment of the present disclosure. The scheme is exemplified by using only the core network elements as the AMF and SF.

In this scheme, the access network device may transmit the first configuration information to the terminal device, and the core network element may transmit the third configuration information to the terminal device. After the terminal device measures the first reference information and acquires the measurement result, the terminal device may report the measurement result to the access network device. The access network device may determine the state change of the terminal device, and further inform the core network element of the change.

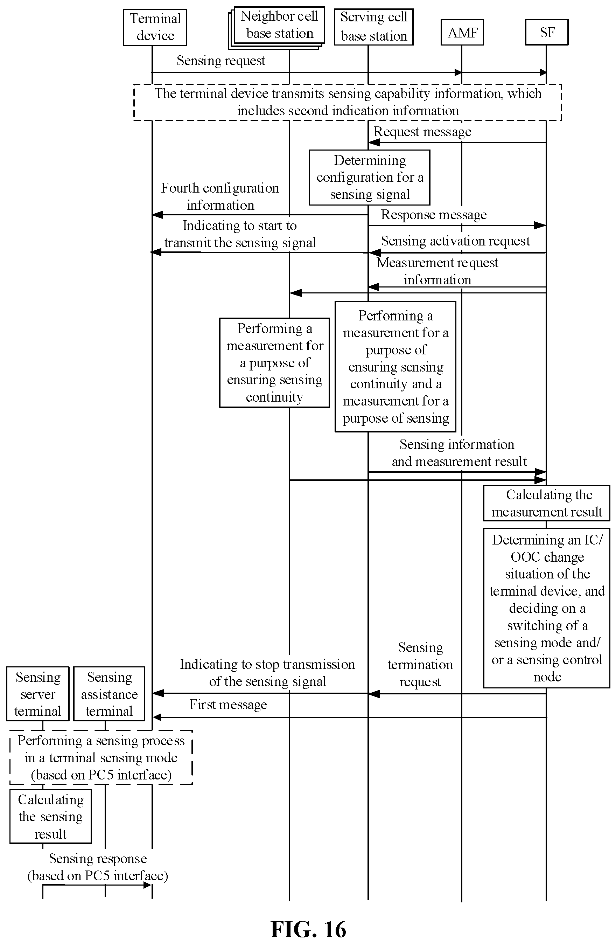

Referring to FIG. 16, FIG. 16 shows a schematic diagram of a sensing control scheme according to another embodiment of the present disclosure. In the scheme is exemplified by using only the core network elements as the AMF and SF, and the first reference signal as the sensing signal. The scheme includes the following operations, which may be arbitrarily combined.
1. The terminal device may transmit a sensing request to the core network element (transmit the sensing request to the SF through the AMF), where the sensing request includes the first indication information.
2. The terminal device may transmit sensing capability information to the access network device (the serving cell base station and the neighbor cell base station) and the core network element, where the sensing capability information includes the second indication information.
3. The core network element may transmit a request message to the access network device (the serving cell base station), to request the access network device to configure the time-frequency resource of the sensing signal. Further, the access network device may transmit a response message to the core network element to feed back the above configuration situation.
4. The access network device (the serving cell base station) may transmit the fourth configuration information (in this case, also is the first configuration information) to the core network element.
5. The core network element may request the access network device (the serving cell base station) to activate the sensing process, and the access network device may instruct the terminal device to initiate the sensing process. The terminal device may transmit the sensing signal based on the first configuration information.
6. The access network device may measure the sensing signal transmitted by the terminal device (according to the measurement request information transmitted by the core network element). Further, the serving cell base station may perform the measurement for the purpose of sensing as well as the measurement for the purpose of ensuring sensing continuity; and the neighbor cell base station may perform the measurement for the purpose of ensuring sensing continuity. In addition, the access network device may transmit, to the core network element, the sensing information and the measurement result acquired by the above measurement.
7. The core network element may calculate the sensing result corresponding to the sensing service based on the sensing information; and the core network element may determine, based on the measurement result, the state change (IC/OOC change) situation of the terminal device.
8. The core network element may request the access network device to stop the participation in the sensing process; and the access network device may instruct the terminal device to stop the transmission of the sensing signal.
9. The core network element may transmit the first message to the access network device.
10. The terminal device may switch to the terminal sensing mode based on the first message, determine the sensing server terminal and/or the sensing assistance terminal in the terminal sensing mode, and further perform the corresponding sensing process.
11. The sensing server terminal may calculate the sensing result and perform the feedback.

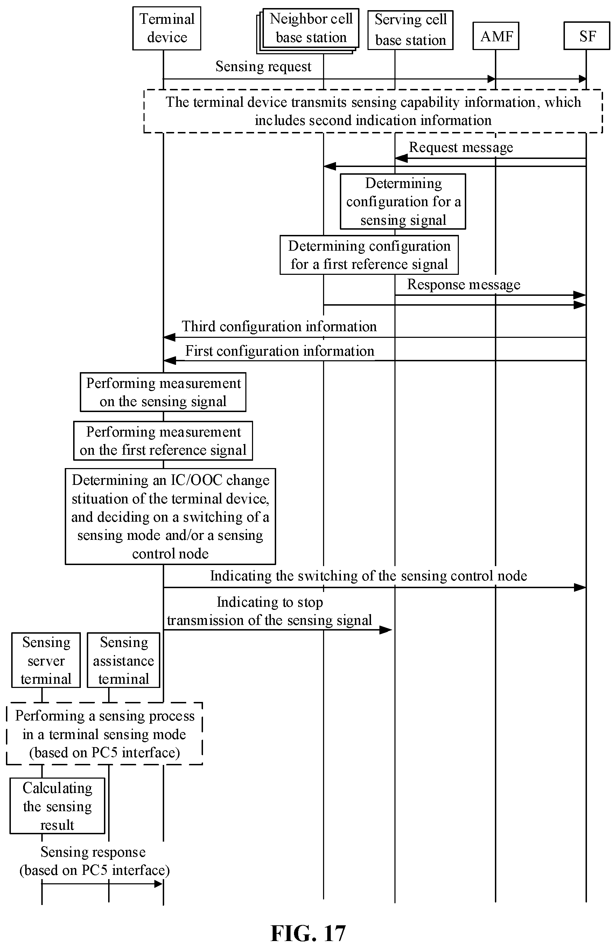

Referring to FIG. 17, FIG. 17 shows a schematic diagram of a sensing control scheme according to another embodiment of the present disclosure. The scheme is exemplified by using only the core network elements as the AMF and SF. The scheme includes the following operations, which may be arbitrarily combined.
1. The terminal device may transmit a sensing request to the core network element (transmit the sensing request to the SF through the AMF), where the sensing request includes the first indication information.
2. The terminal device may transmit sensing capability information to the access network device (the serving cell base station and the neighbor cell base station) and the core network element, where the sensing capability information includes the second indication information.
3. The core network element may transmit a request message to the access network device, to request the access network device to configure the time-frequency resource of the sensing signal and the first reference signal. Further, the serving cell base station may configure the time-frequency resource of the sensing signal and the first reference signal, and the neighbor cell base station may configure the time-frequency resource of the first reference signal. Furthermore, the access network device may transmit a response message to the core network element to feed back the above configuration situation.
4. The core network element may transmit the first configuration information and the third configuration information to the terminal device. In some embodiments, the first configuration information and the third configuration information may be transmitted in the same message. In some embodiments, the first configuration information, the second configuration information, and the third configuration information may be transmitted in the same message. Furthermore, the terminal device may perform measurement on the first reference signal based on the first configuration information, and acquire the measurement result. Based on the third configuration information, the terminal device may perform measurement on the sensing signal, and acquire the sensing information.
5. The terminal device may determine its own state change situation (IC/OOC change situation) based on the measurement result and the preconfigured condition (the condition configured by the second configuration information). In addition, the terminal device may autonomously determine the switching of the sensing mode and/or the sensing control node.
6. The terminal device may indicate to the core network element that the sensing control node is about to be switched, and further instruct to the access network device (the serving cell base station) to stop the transmission of the sensing signal.
7. The terminal device may switch to the terminal sensing mode, determine the sensing server terminal and/or the sensing assistance terminal in the terminal sensing mode, and further perform the corresponding sensing process.
8. The sensing server terminal may calculate and acquire the sensing result, and further perform the feedback.

In some embodiments, there is also provided a sensing control scheme for the terminal device to return to the IC scenario from the OOC scenario, the scheme includes the following operations, which may be arbitrarily combined.
1. The network device may transmit the first configuration information and the first reference signal to the terminal device.
2. The terminal device may perform measurement on the first reference signal based on the first configuration information, and further acquire the measurement result.
3. The terminal device may determine its own state change situation (IC/OOC change situation) based on the measurement result and the preconfigured condition. Exemplarily, the terminal device may discover a cell capable of establishing communication or sensing, according to whether the measured RSRP of the first reference signal exceeds the threshold value. Alternatively, the terminal device may discover the cell capable of establishing communication or sensing, according to whether the above RSRP exceeds the threshold value over the preconfigured time duration. Alternatively, the terminal device may determine whether to return to the IC scenario based on its own location and the area information with the network coverage. Alternatively, the terminal device may determine, based on the cell selection S criterion, whether to return to the IC scenario.
4. The terminal device may indicate its own return to the network device. In some embodiments, the terminal device may implement the indication to the network device through random access. Alternatively, the terminal device may implement the indication to the network device through RRC signaling. Alternatively, the terminal device may implement the indication to the network device through a MAC Control Element (MAC CE). Alternatively, the terminal device may implement the indication to the network device through NAS signaling. In some embodiments, the above information for indicating the return to the network device may be carried in configuration information (such as configuration information for the sensing signal, the sensing mode and the sensing participation node) transmitted by each terminal device participating in sensing in the OOC scenario.
5. The terminal device may switch to the cooperative sensing mode, determine the sensing control node (i.e., the corresponding core network element) in the cooperative sensing mode, and further perform the corresponding sensing process. In some embodiments, when the terminal device enters the communication coverage range of the network device, the network device may notify the terminal device to switch the sensing control node (the switching from the sensing server terminal to the core network element). When the terminal device enters the sensing coverage range of the network device, the network device may notify the terminal device to switch the sensing mode.
6. The core network element may calculate and acquire the sensing result, and further perform the feedback.

In addition, it should be noted that, when the terminal device returns back to the IC scenario from the OOC scenario, the sensing mode and/or the sensing control node may not be switched in a case where the quality of the sensing service can be maintained. The present disclosure does not impose any limitation in this regard.

It should be noted that, in the aforementioned method embodiments, the operations performed by the terminal device may be implemented independently as the sensing control method on the terminal device side. The operations performed by the network device may be implemented independently as the sensing control method on the network device side. Details not disclosed in either side embodiments may be references from the other side embodiments.

The following describes the embodiments of the apparatus of the present disclosure, which can be used to implement the embodiments of the method of the present disclosure. For details not disclosed in the embodiments of the apparatus of the present disclosure, references can be made to the embodiments of the method of the present disclosure.

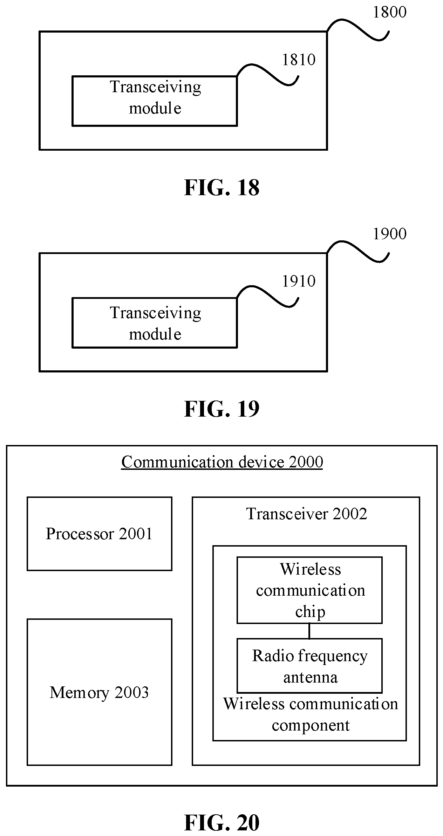

Referring to FIG. 18, FIG. 18 shows a block diagram of a sensing control apparatus according to one embodiment of the present disclosure. The apparatus has a functionality of implementing the aforementioned sensing control method on the terminal device side. Such functionality may be implemented by hardware, or may be implemented by the hardware executing the corresponding software. The apparatus may be the terminal device described above or may be provided in the terminal device. As shown in FIG. 18, the apparatus 1800 may include a transceiving module 1810.

The transceiving module 1810 is configured to receive first configuration information. The first configuration information is configuration information related to a first reference signal, and a measurement result for the first reference signal is used to determine a switching of a sensing mode and/or a sensing control node.

In some embodiments, the transceiving module 1810 may be further configured to measure, based on the first configuration information, the first reference signal transmitted by at least one cell, and acquire the measurement result. Herein, the at least one cell includes a serving cell of the terminal device and/or at least one neighbor cell of the serving cell.

In some embodiments, the transceiving module 1810 may be further configured to transmit the first reference signal based on the first configuration information. Herein, the measurement result is acquired by measuring the first reference signal by an access network device of at least one cell; and the at least one cell includes a serving cell of the terminal device and/or at least one neighbor cell of the serving cell.

In some embodiments, the transceiving module 1810 may be further configured to receive a first message, where the first message being used to notify the terminal device to switch the sensing mode and/or the sensing control node.

In some embodiments, the first message may be used to indicate at least one of the following: a sensing mode to which is switched; a sensing control node to which is switched; a sensing participation node corresponding to a sensing mode to which is switched; or sensing signal configuration information corresponding to a sensing mode to which is switched.

In some embodiments, the transceiving module 1810 may be further configured to trigger the switching of the sensing mode and/or the sensing control node, in a case where the measurement result satisfies a condition.

In some embodiments, the transceiving module 1810 may be further configured to autonomously determine the switching of the sensing mode and/or the sensing control node.

In some embodiments, the transceiving module 1810 may be further configured to transmit a second message to a network device, where the second message being used to indicate that a state change of the terminal device occurs; and receives a first message transmitted by the network device, where the first message being used to notify the terminal device to switch the sensing mode and/or the sensing control node.

In some embodiments, the transceiving module 1810 may be further configured to receive second configuration information, where the second configuration information is used to configure the condition for triggering the switching of the sensing mode and/or the sensing control node.

In some embodiments, the second configuration information may be further used to configure at least one of the following: configuration information of a preconfigured sensing mode; or, identification information of a preconfigured sensing control node.

In some embodiments, the first configuration information and the second configuration information may be transmitted in a same message. Alternatively, the first configuration information and the second configuration information may be transmitted in different messages.

In some embodiments, the condition may include at least one of the following: a threshold value corresponding to a signal quality of the first reference signal; a threshold value corresponding to a change amount of a signal quality of the first reference signal; time information; or location information.

In some embodiments, the condition may be used to determine at least one of the following: the terminal device entering an outside of coverage from an inside of the coverage; the terminal device being about to enter an outside of coverage from an inside of the coverage; the terminal device entering an inside of coverage from an outside of the coverage; or, the terminal device being about to enter an inside of coverage from an outside of the coverage.

In some embodiments, the first configuration information may be used to configure at least one of the following: a time-frequency resource of the first reference signal; a measurement quantity of the first reference signal; a measurement period for the first reference signal; or, reporting configuration for the measurement result.

In some embodiments, the first reference signal may be a sensing signal corresponding to a sensing service. Alternatively, the first reference signal may be different from the sensing signal corresponding to the sensing service.

In some embodiments, the measurement result and the sensing information corresponding to the sensing service may be independently reported to the network device. Alternatively, the measurement result may be reported to the network device together with the sensing information corresponding to the sensing service.

In some embodiments, the transceiving module 1810 may be further configured to, in a case where reporting configuration for the measurement result is satisfied, determine, based on whether the sensing information is triggered to be reported, whether to report the measurement result to the network device together with the sensing information.

In some embodiments, the transceiving module 1810 may be further configured to: not report the measurement result in a case where the sensing information is not triggered to be reported; and report the measurement result that has not been reported to the network device together with the sensing information, in a case where the sensing information is triggered to be reported.

In some embodiments, the transceiving module 1810 may be further configured to save a latest measurement result during a process of waiting for triggering the sensing information to be reported.

In some embodiments, the transceiving module 1810 may be further configured to: transmit or receive a sensing request for initiating a sensing service, where the sensing request includes first indication information, and the first indication information is used to indicate whether the sensing service has a continuity requirement; and/or, transmit sensing capability information, where the sensing capability information includes second indication information, and the second indication information is used to indicate whether the terminal device supports or provides a capability related to continuity of a sensing service.

Referring to FIG. 19, FIG. 19 shows a block diagram of a sensing control apparatus according to another embodiment of the present disclosure. The apparatus has a functionality of implementing the aforementioned sensing control method on the network device side. Such functionality may be implemented by hardware, or may be implemented by the hardware executing the corresponding software. The apparatus may be the network device described above or may be provided in the network device. As shown in FIG. 19, the apparatus 1900 may include a transceiving module 1910.

The transceiving module 1910 is configured to transmit first configuration information. The first configuration information being configuration information related to a first reference signal, and a measurement result for the first reference signal being used to determine a switching of a sensing mode and/or a sensing control node of a terminal device.

In some embodiments, the transceiving module 1910 may be further configured to receiving the measurement result transmitted by the terminal device. Herein, the measurement result is acquired by the terminal device measuring the first reference signal transmitted by at least one cell; and the at least one cell includes a serving cell of the terminal device and/or at least one neighbor cell of the serving cell.

In some embodiments, the transceiving module 1910 may be further configured to receive the measurement result transmitted by an access network device of at least one cell. Herein, the measurement result is acquired by the access network device measuring the first reference signal transmitted by the terminal device; and the at least one cell includes a serving cell of the terminal device and/or at least one neighbor cell of the serving cell.

In some embodiments, in case where the network device is a core network element, the core network element may determine, based on the measurement result, that a state change of the terminal device occurs. Alternatively, the core network element may receive third indication information transmitted by an access network device, the third indication information is acquired by the access network device based on the measurement result, and the third indication information is used to indicate that a state change of the terminal device occurs.

In some embodiments, the transceiving module 1910 may be further configured to transmit a first message, where the first message is used to notify the terminal device to switch the sensing mode and/or the sensing control node.

In some embodiments, the first message may be used to indicate at least one of the following: a sensing mode to which is switched; a sensing control node to which is switched; a sensing participation node corresponding to a sensing mode to which is switched; or, sensing signal configuration information corresponding to a sensing mode to which is switched.

In some embodiments, the transceiving module 1910 may be further configured to transmit second configuration information, where the second configuration information is used to configure a condition for triggering the switching of the sensing mode and/or the sensing control node.

In some embodiments, the transceiving module 1910 may be further configured to receive a second message transmitted by the terminal device, where the second message is used to indicate that a state change of the terminal device occurs; and, transmit a first message to the terminal device, where the first message is used to notify the terminal device to switch the sensing mode and/or the sensing control node.

In some embodiments, the condition may include at least one of the following: a threshold value corresponding to a signal quality of the first reference signal; a threshold value corresponding to a change amount of a signal quality of the first reference signal; time information; or, location information.

In some embodiments, the second configuration information may be further used to configure at least one of the following: configuration information of a preconfigured sensing mode; or, identification information of the preconfigured sensing control node.

In some embodiments, the first configuration information and the second configuration information may be transmitted in a same message. Alternatively, the first configuration information and the second configuration information may be transmitted in different messages.

In some embodiments, the condition may be used to determine at least one of the following: the terminal device entering an outside of coverage from an inside of the coverage; the terminal device being about to enter an outside of coverage from an inside of the coverage; the terminal device entering an inside of coverage from an outside of the coverage; or, the terminal device being about to enter an inside of coverage from an outside of the coverage.

In some embodiments, the first configuration information may be used to configure at least one of the following: a time-frequency resource of the first reference signal; a measurement quantity for the first reference signal; a measurement period for the first reference signal; or, reporting configuration for the measurement result.

In some embodiments, the first reference signal may be a sensing signal corresponding to a sensing service. Alternatively, the first reference signal may be different from the sensing signal corresponding to the sensing service.

In some embodiments, the transceiving module 1910 may be further configured to receive or transmit a sensing request for initiating a sensing service, where the sensing request includes first indication information, and the first indication information is used to indicate whether the sensing service has a continuity requirement; and/or, receive sensing capability information, where the sensing capability information includes second indication information, and the second indication information is used to indicate whether the terminal device supports or provides a capability related to continuity of a sensing service.

In some embodiments, the time-frequency resource of the first reference signal may be determined by an access network device of a serving cell of the terminal device and/or at least one neighbor cell of the serving cell.

Referring to FIG. 20, FIG. 20 shows a schematic structural diagram of a communication device according to one embodiment of the present disclosure. The communication device may be the aforementioned terminal device or the aforementioned network device. The communication device 2000 may include a processor 2001, a transceiver 2002, and a memory 2003. The transceiver 2002 may be configured to implement the functions of the aforementioned transceiving module, and the processor 2001 may be configured to implement other processing functions or control transmission and/or reception.

The processor 2001 includes one or more processing cores, and executes various functional applications and information processing by running software programs and modules.

The transceiver 2002 may include a receiver and a transmitter. For example, the receiver and the transmitter may be implemented as the same wireless communication component, which may include a wireless communication chip and a radio frequency antenna.

The memory 2003 may be connected to the processor 2001 and the transceiver 2002.

The memory 2003 may be configured to store a computer program executed by a processor, and the processor 2001 is configured to execute the computer program to implement each step of the method embodiments described above.

In some embodiments, when the communication device is a terminal device, the transceiver 1202 is configured to receive first configuration information. The first configuration information is configuration information related to a first reference signal, and a measurement result for the first reference signal is used to determine a switching of a sensing mode and/or a sensing control node.

In some embodiments, when the communication device is a network device, the transceiver 1202 is configured to transmit first configuration information. The first configuration information is configuration information related to a first reference signal, and a measurement result for the first reference signal is used to determine a switching of a sensing mode and/or a sensing control node of a terminal device.

For details not described in detail in this embodiment, reference can be made to the above embodiments, which will not be repeated herein.

Furthermore, the memory may be implemented by any type of volatile or non-volatile storage device or a combination thereof. The volatile or non-volatile storage device may include, but not limited to, a magnetic or optical disk, an electrically erasable programmable read-only memory, an erasable programmable read-only memory, a static random access memory, a read-only memory, a magnetic memory, a flash memory, a programmable read-only memory, or a combination thereof.

An embodiment of the present disclosure further provides a computer-readable storage medium. The computer-readable storage medium stores a computer program thereon, and the computer program is executed by a processor to implement the sensing control method on the terminal device side or the sensing control method on the network device side. In some embodiments, the computer-readable storage medium may include: a Read-Only Memory (ROM), a Random-Access Memory (RAM), a Solid State Drive (SSD), an optical disk, or the like. Herein, the random access memory may include a Resistance Random Access Memory (ReRAM) and a Dynamic Random Access Memory (DRAM).

An embodiment of the present disclosure further provides a chip. Herein, the chip includes a programmable logic circuitry and/or program instructions. When the chip running, the chip is configured to implement the sensing control method on the terminal device side or the sensing control method on the network device side.

An embodiment of the present disclosure further provides a computer program product. Herein, the computer program product includes a computer program stored in a computer-readable storage medium, and a processor reads and executes the computer program from the computer-readable storage medium to implement the sensing control method on the terminal device side or the sensing control method on the network device side.

It should be understood that the "indication" mentioned in the embodiments of the present disclosure may refer to a direct indication, an indirect indication, or an association relationship. For example, A indicates B, which may mean that A directly indicates B, such as B being acquired by A; which may also mean that A indicates B indirectly, such as A indicates C, and B can be acquired through C; or which may also mean that there is an association relationship between A and B.

In the description of the embodiments of the present disclosure, the term "correspondence" may indicate that there is a direct correspondence or indirect correspondence relationship between two objects, or it may indicate that there is a correlation relationship between the two objects, or it may indicate a relationship between indicating and being indicated, configuring and being configured, or the like.

In some embodiments of the present disclosure, "predefined" may be realized by storing corresponding codes, tables, or other means capable of indicating relevant information in advance in the devices (e.g., including terminal devices and network devices). The specific implementation is not limited in the present disclosure. For example, "predefined" may refer to definition specified in the protocols.

In some embodiments of the present disclosure, the "protocol" may refer to a standard protocol in the field of communication, and may include, for example, an LTE protocol, an NR protocol, and related protocols applied in future communication systems, which are not limited in the present disclosure.

Reference herein to "a plurality" refers to two or more. The term "and/or" describes the association relationship between the associated objects, indicating that there may be three relationships. For example, A and/or B may mean three situations: A exists alone, A and B exist simultaneously, and B exists alone. The character "/" generally indicates that the associated objects before and after are an "or" relationship.

Reference herein to "greater than or equal to" may mean greater than or equal to, or simply greater than. Similarly, "less than or equal to" may mean less than or equal to, or simply less than.

In addition, the numbering of the operations described herein is provided only as examples illustrating a possible sequence of execution between operations. In some other embodiments, the above operations may also be executed out of the sequence of numbering, for example, two different numbered operations may be executed simultaneously, or two different numbered operations may be executed in the reverse sequence as shown in the figures. The embodiments of the present disclosure are not limited to the indicated sequence.

Those skilled in the art will appreciate that, in one or more of the examples described above, the functions described in the embodiments of the present disclosure may be implemented in hardware, software, firmware, or any combination thereof. When implemented using software, these functions may be stored in a computer-readable medium or transmitted as one or more instructions or codes on a computer-readable medium. The computer-readable medium includes a computer storage medium and a communication medium, where the communication media includes any medium that facilitates the transfer of the computer program from one place to another. The storage medium may be any available medium accessible by a general-purpose or special-purpose computer.

The foregoing description is merely illustrative of exemplary embodiments of the present disclosure, and is not intended to limit the scope of the present disclosure. Any modification, equivalent substitution, improvement, etc. made within the spirit and principles of the present disclosure should be included within the scope of protection of the present disclosure.

## Claims

1. A sensing control method, performed by a terminal device, the method comprising:
receiving first configuration information, the first configuration information being configuration information related to a first reference signal, and a measurement result for the first reference signal being used to determine a switching of a sensing mode and/or a sensing control node.

2. The method of claim 1, wherein after receiving the first configuration information, the method further comprises:
measuring, based on the first configuration information, the first reference signal transmitted by at least one cell, and acquiring the measurement result; wherein the at least one cell comprises a serving cell of the terminal device and/or at least one neighbor cell of the serving cell.

3. The method of claim 1, wherein after receiving the first configuration information, the method further comprises:
transmitting the first reference signal based on the first configuration information, wherein the measurement result is acquired by measuring the first reference signal by an access network device of at least one cell; and the at least one cell comprises a serving cell of the terminal device and/or at least one neighbor cell of the serving cell.

4. The method of claim 2 or 3, further comprising:
receiving a first message, the first message being used to notify the terminal device to switch the sensing mode and/or the sensing control node.

5. The method of claim 4, wherein the first message is used to indicate at least one of the following:
a sensing mode to which is switched;
a sensing control node to which is switched;
a sensing participation node corresponding to a sensing mode to which is switched; or
sensing signal configuration information corresponding to a sensing mode to which is switched.

6. The method of claim 1, further comprising:
in a case where the measurement result satisfies a condition, triggering the switching of the sensing mode and/or the sensing control node.

7. The method of claim 6, wherein triggering the switching of the sensing mode and/or the sensing control node comprises:
autonomously determining the switching of the sensing mode and/or the sensing control node.

8. The method of claim 6, wherein triggering the switching of the sensing mode and/or the sensing control node comprises:
transmitting a second message to a network device, the second message being used to indicate that a state change of the terminal device occurs; and
receiving a first message transmitted by the network device, the first message being used to notify the terminal device to switch the sensing mode and/or the sensing control node.

9. The method of any one of claims 6 to 8, further comprising:
receiving second configuration information, the second configuration information being used to configure the condition for triggering the switching of the sensing mode and/or the sensing control node.

10. The method of claim 9, wherein the second configuration information is further used to configure at least one of the following:
configuration information of a preconfigured sensing mode; or
identification information of a preconfigured sensing control node.

11. The method of claim 9 or 10, wherein
the first configuration information and the second configuration information are transmitted in a same message;
or,
the first configuration information and the second configuration information are transmitted in different messages.

12. The method of any one of claims 6 to 11, wherein the condition comprises at least one of the following:
a threshold value corresponding to a signal quality of the first reference signal;
a threshold value corresponding to a change amount of a signal quality of the first reference signal;
time information; or
location information.

13. The method of any one of claims 6 to 12, wherein the condition is used to determine at least one of the following:
the terminal device entering an outside of coverage from an inside of the coverage;
the terminal device being about to enter an outside of coverage from an inside of the coverage;
the terminal device entering an inside of coverage from an outside of the coverage; or
the terminal device being about to enter an inside of coverage from an outside of the coverage.

14. The method of any one of claims 1 to 13, wherein the first configuration information is used to configure at least one of the following:
a time-frequency resource of the first reference signal;
a measurement quantity of the first reference signal;
a measurement period for the first reference signal; or
reporting configuration for the measurement result.

15. The method of any one of claims 1 to 14, wherein
the first reference signal is a sensing signal corresponding to a sensing service;
or,
the first reference signal is different from a sensing signal corresponding to a sensing service.

16. The method of any one of claims 1 to 15, wherein,
the measurement result and sensing information corresponding to a sensing service are independently reported to a network device;
or,
the measurement result is reported to a network device together with sensing information corresponding to a sensing service.

17. The method of claim 16, wherein in a case where the measurement result is reported to the network device together with the sensing information corresponding to the sensing service, the method further comprises:
in a case where reporting configuration for the measurement result is satisfied, determining, based on whether the sensing information is triggered to be reported, whether to report the measurement result to the network device together with the sensing information.

18. The method of claim 17, wherein determining, based on whether the sensing information is triggered to be reported, whether to report the measurement result to the network device together with the sensing information comprises:
in a case where the sensing information is not triggered to be reported, not reporting the measurement result; and
in a case where the sensing information is triggered to be reported, reporting the measurement result that has not been reported to the network device together with the sensing information.

19. The method of claim 17 or 18, further comprising:
saving a latest measurement result during a process of waiting for triggering the sensing information to be reported.

20. The method of any one of claims 1 to 19, further comprising:
transmitting or receiving a sensing request for initiating a sensing service, wherein the sensing request comprises first indication information, and the first indication information is used to indicate whether the sensing service has a continuity requirement;
and/or,
transmitting sensing capability information, wherein the sensing capability information comprises second indication information, and the second indication information is used to indicate whether the terminal device supports or provides a capability related to continuity of a sensing service.

21. A sensing control method, performed by a network device, the method comprising:
transmitting first configuration information, the first configuration information being configuration information related to a first reference signal, and a measurement result for the first reference signal being used to determine a switching of a sensing mode and/or a sensing control node of a terminal device.

22. The method of claim 21, wherein after transmitting the first configuration information, the method further comprises:
receiving the measurement result transmitted by the terminal device, wherein the measurement result is acquired by the terminal device measuring the first reference signal transmitted by at least one cell; and the at least one cell comprises a serving cell of the terminal device and/or at least one neighbor cell of the serving cell.

23. The method of claim 21, wherein after transmitting the first configuration information, the method further comprises:
receiving the measurement result transmitted by an access network device of at least one cell, wherein the measurement result is acquired by the access network device measuring the first reference signal transmitted by the terminal device; and the at least one cell comprises a serving cell of the terminal device and/or at least one neighbor cell of the serving cell.

24. The method of claim 22 or 23, wherein in case where the network device is a core network element,
the core network element determines, based on the measurement result, that a state change of the terminal device occurs;
or,
the core network element receives third indication information transmitted by an access network device, the third indication information is acquired by the access network device based on the measurement result, and the third indication information is used to indicate that a state change of the terminal device occurs.

25. The method of any one of claims 22 to 24, further comprising:
transmitting a first message, the first message being used to notify the terminal device to switch the sensing mode and/or the sensing control node.

26. The method of claim 25, wherein the first message is used to indicate at least one of the following:
a sensing mode to which is switched;
a sensing control node to which is switched;
a sensing participation node corresponding to a sensing mode to which is switched; or
sensing signal configuration information corresponding to a sensing mode to which is switched.

27. The method of claim 21, further comprising:
transmitting second configuration information, the second configuration information being used to configure a condition for triggering the switching of the sensing mode and/or the sensing control node.

28. The method of claim 27, wherein in a case where the measurement result satisfies the condition, the switching of the sensing mode and/or the sensing control node is determined by the terminal device autonomously.

29. The method of claim 27, further comprising:
receiving a second message transmitted by the terminal device, the second message being used to indicate that a state change of the terminal device occurs; and
transmitting a first message to the terminal device, the first message being used to notify the terminal device to switch the sensing mode and/or the sensing control node.

30. The method of any one of claims 27 to 29, wherein the condition comprises at least one of the following:
a threshold value corresponding to a signal quality of the first reference signal;
a threshold value corresponding to a change amount of a signal quality of the first reference signal;
time information; or
location information.

31. The method of any one of claims 27 to 30, wherein the second configuration information is further used to configure at least one of the following:
configuration information of a preconfigured sensing mode; or
identification information of a preconfigured sensing control node.

32. The method of any one of claims 27 to 31, wherein
the first configuration information and the second configuration information are transmitted in a same message;
or,
the first configuration information and the second configuration information are transmitted in different messages.

33. The method of any one of claims 27 to 32, wherein the condition is used to determine at least one of the following:
the terminal device entering an outside of coverage from an inside of the coverage;
the terminal device being about to enter an outside of coverage from an inside of the coverage;
the terminal device entering an inside of coverage from an outside of the coverage; or
the terminal device being about to enter an inside of coverage from an outside of the coverage.

34. The method of any one of claims 21 to 33, wherein the first configuration information is used to configure at least one of the following:
a time-frequency resource of the first reference signal;
a measurement quantity for the first reference signal;
a measurement period for the first reference signal; or
reporting configuration for the measurement result.

35. The method according to any one of claims 21 to 34, wherein
the first reference signal is a sensing signal corresponding to a sensing service;
or,
the first reference signal is different from a sensing signal corresponding to a sensing service.

36. The method of any one of claims 21 to 35, further comprising:
receiving or transmitting a sensing request for initiating a sensing service, wherein the sensing request comprises first indication information, and the first indication information is used to indicate whether the sensing service has a continuity requirement;
and/or,
receiving sensing capability information, wherein the sensing capability information comprises second indication information, and the second indication information is used to indicate whether the terminal device supports or provides a capability related to continuity of a sensing service.

37. The method of any one of claims 21 to 36, wherein a time-frequency resource of the first reference signal is determined by an access network device of a serving cell of the terminal device and/or at least one neighbor cell of the serving cell.

38. A sensing control apparatus, comprising:
a transceiving module, configured to receive first configuration information, the first configuration information being configuration information related to a first reference signal, and a measurement result for the first reference signal being used to determine a switching of a sensing mode and/or a sensing control node.

39. A sensing control apparatus, comprising:
a transceiving module, configured to transmit first configuration information, the first configuration information being configuration information related to a first reference signal, and a measurement result for the first reference signal being used to determine a switching of a sensing mode and/or a sensing control node of a terminal device.

40. A communication device, comprising a processor and a memory, wherein the memory stores a computer program therein, the processor executes the computer program to implement the method of any one of claims 1 to 20 or to implement the method of any one of claims 21 to 37.

41. A computer-readable storage medium, having stored a computer program therein, wherein the computer program is used to be executed by a processor to implement the method of any one of claims 1 to 20 or to implement the method of any one of claims 21 to 37.

42. A chip, comprising programmable logic circuitry and/or program instructions, when the chip is running, the chip is configured for implementing the method of any one of claims 1 to 20, or the method of any one of claims 21 to 37.

43. A computer program product, comprising computer instructions stored in a computer-readable storage medium, and a processor reads and executes the computer instructions from the computer-readable storage medium to implement the method of any one of claims 1 to 20, or to the method of any one of claims 21 to 37.
